**Europäisches Patentamt**

**European Patent Office**

**Office européen des brevets**

(19)

(11) Veröffentlichungsnummer : **0 352 306 B1**

(12) # EUROPÄISCHE PATENTSCHRIFT

(45) Veröffentlichungstag der Patentschrift :
**19.08.92 Patentblatt 92/34**

(51) Int. Cl.$^5$ : **F16D 65/56**

(21) Anmeldenummer : **89900247.1**

(22) Anmeldetag : **20.12.88**

(86) Internationale Anmeldenummer :
**PCT/EP88/01182**

(87) Internationale Veröffentlichungsnummer :
**WO 89/06759 27.07.89 Gazette 89/16**

(54) **SELBSTTÄTIGE NACHSTELLEINRICHTUNG FÜR EINE SCHEIBENBREMSE.**

(30) Priorität : **13.01.88 DE 3800734**
**13.01.88 DE 3800735**
**06.02.88 DE 3803564**

(43) Veröffentlichungstag der Anmeldung :
**31.01.90 Patentblatt 90/05**

(45) Bekanntmachung des Hinweises auf die
Patenterteilung :
**19.08.92 Patentblatt 92/34**

(84) Benannte Vertragsstaaten :
**DE FR GB SE**

(56) Entgegenhaltungen :
**EP-A- 0 250 285**
**DE-A- 2 048 614**
**DE-A- 2 736 152**
**DE-A- 2 810 445**
**DE-A- 3 336 120**
**DE-B- 1 725 032**
**DE-C- 2 615 404**

(73) Patentinhaber : **ALFRED TEVES GMBH**
**Guerickestrasse 7**
**W-6000 Frankfurt/Main 90 (DE)**

(72) Erfinder : **WEILER, Rolf**
**Zum Kohlwaldfeld 20**
**W-6239 Eppstein 2 (DE)**
Erfinder : **STÖRZEL, Karl**
**Wilhelm-Busch-Weg 4**
**W-6072 Dreieich (DE)**
Erfinder : **THIEL, Rudolf**
**Am Ebelfeld 179**
**W-6000 Frankfurt/Main 90 (DE)**
Erfinder : **BIRKENBACH, Alfred**
**Kriemhildring 13a**
**W-6234 Hattersheim 2 (DE)**
Erfinder : **HENDRICH, Uwe**
**Alfred-Döblin-Stra e 19**
**W-6500 Mainz 42 (DE)**

(74) Vertreter : **Portwich, Peter**
**c/o ALFRED TEVES GMBH Guerickestrasse 7**
**W-6000 Frankfurt/Main 90 (DE)**

## Beschreibung

Die Erfindung betrifft eine selbsttätige Nachstellvorrichtung für eine Scheibenbremse gemäß dem Oberbegriff des Patentanspruches 1. Derartige Nachstellvorrichtungen sind z.B. aus der DE-A-33 36 120 bekannt.

Bei derartigen Nachstellvorrichtungen können sich unter Umständen dann Schwierigkeiten ergeben, wenn bei angezogener Handbremse die Fußbremse betätigt wird. In diesem Falle, bei dem bei Beginn der Fußbremsbetätigung die Reibkupplung durch die Handbremse betätigt ist und somit die Nachstellelemente der Nachstellvorrichtung gegeneinander verriegelt sind, wird erst bei relativ hohem Kraftaufwand des durch die Fußbremsbetätigung ausgelösten hydraulischen Druckes die Reibkupplung durch Bewegung des Bremskolbens in Bremsrichtung gelöst, so daß erst ab diesem Zeitpunkt die Nachstellung der Nachstelleinrichtung vorgenommen wird. Hierbei kann es leicht geschehen, daß bei den zu diesem Zeitpunkt auftretenden erheblichen Kräften durch die Dehnung des Bremssattels, der Bremsbeläge und der anderen innerhalb des Kraftweges der Bremse liegenden Elemente eine Hysterese zwischen dem kraftmäßig festgelegten Punkt, bei dem die Reibkupplung gelöst wird und dem kraftmäßig festgelegten Punkt liegt, bei dem beim Lösen der Bremse die Reibkupplung wieder schließt. Auf diese Weise besteht die Gefahr, daß bei angezogener Handbremse und zusätzlicher Fußbremsung (z.B. 15 bar Druckaufbau) das Bremssystem unabhängig von dem tatsächlich vorliegenden Abrieb der Bremsbeläge nicht zurückstellt und lüftet. Dies führt wegen der dann nicht mehr möglichen vollständigen Lösung der Bremse und dem Fehlen der hiermit bezweckten Belüftung der Bremsscheibe zu einer Bremsscheibenüberhitzung bis hin zu Lagerschäden und Dampfblasenbildung.

Weiterhin wird durch die wegen der angezogenen Handbremse verriegelten Nachstellelemente eine hydraulische Betätigung des Bremskolbens erschwert oder, wenn die notwendigen Pedalkräfte nicht zur Verfügung stehen, unter Umständen ganz unmöglich gemacht.

Aufgabe der Erfindung ist es daher, bei einer Nachstellvorrichtung der aus dem Oberbegriff des Anspruchs 1 ersichtlichen Art Maßnahmen anzugeben, die auch bei vielfacher Fehlbetätigung eines Bremsensystems durch gleichzeitiges Betätigen von Handbremse und Fußbremse die weiter oben geschilderten Gefahren mit Sicherheit ausschließen. Die Aufgabe der Erfindung besteht insbesondere darin, daß die Brems-Nachstellvorrichtung bei angezogener Handbremse eine ungewollte Spielnachstellung vermeiden soll. Gleichzeitig soll bei Fahrt mit irrtümlich angezogener Handbremse ein normales, gleichmäßiges Bremsen mit der hydraulischen Fußremse möglich sein. Die Lösung dieser Aufgabe besteht erfindungsgemäß in den den Patentanspruch 1, 9 und 14 kennzeichnenden Merkmalen.

Durch die erfindungsgemäße Ausgestaltung gemäß Anspruch 1 läßt sich mit Sicherheit verhindern, daß bei fehlerhafter Betätigung der Bremse (d. h. Fußbremsenbetätigung bei angezogener Handbremse), die die Nachstellung arretierende Reibkupplung erst bei großen Bremskräften gelöst wird, so daß die weiter oben beschriebene Hysterese nicht auftreten kann. Durch die Erfindung wird weiterhin sichergestellt, daß der Bremskolben (zumindest um einen bestimmten Betrag) in Richtung Betätigung der Bremsen mit üblichem Kraftaufwand bewegt werden kann, ohne daß durch die über das andere Nachstellelement auf das eine Nachstellelement ausgeübte Kraft, dieses von der Reibkupplung abgehoben und ein Nachstellvorgang vorgenommen werden kann. Vielmehr ist durch die Erfindung die Verschiebung des Bremskolbens zur Herbeiführung eines Bremsvorganges möglich, ohne die Arretierung der Reibkupplung zu lösen und damit einen Nachstellvorgang zu ermöglichen.

Ist andererseits die Handbremse ordnungsgemäß gelöst und damit auch die Reibkupplung außer Eingriff, so kann durch die Kolbenbewegung das andere Nachstellelement in Kolbenbewegungsrichtung mitgeführt und durch die drehbare Lagerung des einen Nachstellelementes im Gehäuse die Nachstellung in beiden Richtungen ohne weiteres vorgenommen werden, solange nur sichergestellt ist, daß die das andere Nachstellelement festhaltende Feder so kräftig wirksam ist, daß sie die Reibung zwischen den beiden Nachstellelementen überwindet, die durch ein selbsthemmungsfreies Gewinde miteinander verbunden sind.

Während nun sich die drehsichere Lagerung des anderen Nachstellelementes mit Hilfe einer weiteren Reibkupplung am Kolbenboden verwirklichen läßt, empfiehlt sich hierzu in Weiterbildung der Erfindung eine im Anspruch 2 aufgeführte Merkmalskombination. Hierbei ist das andere Nachstellelement im Kolbenboden in seiner Längsachse verschiebbar gegenüber dem Kolben, aber undrehbar gegenüber diesen gelagert.

Durch die Verwendung der Merkmalskombination nach Anspruch 3 läßt sich zusätzlich noch eine zentrierende Wirkung durch den Anschlag erreichen, welcher bei der Betätigung der Handbremse die Aufgabe hat, eine kraftschlüssige Verbindung zwischen dem anderen Nachstellelement und den Bremskolben herzustellen. Dabei kann der zentrierende Konus gemäß Anspruch 4 einstückig mit den anderen Nachstellelement, etwa durch Gießen oder Schweißen verbunden sein, oder aber auch in anderer Form durch Pressen, Schrumpfen oder andere Maßnahmen mit diesen Nachstellelement fest verbunden werden.

Gemäß Anspruch 5 empfiehlt sich als Feder eine Tellerfeder, die insbesondere dann von Vorteil ist, wenn man in einfacher Weise für den in Anspruch 7 vorgeschlagenen Ansatz sorgen möchte. Dieser Ansatz sorgt dafür, daß die nachgebende Wirkung der Feder auf eine bestimmte Strecke begrenzt wird.

Bei der Dimensionierung der Feder wird in vorteilhafter Weiterbildung der Erfindung empfohlen, die in Anspruch 8 angegebenen Dimensionierungshinweise zu beachten, um sicherzustellen, daß bei normaler Handhabung der Fußbremse tatsächlich auch nachgestellt wird und andererseits aber auch die axiale Verschiebbarkeit des anderen Nachstellelementes gegenüber dem Bremskolben bei angezogener Handbremse sichergestellt und damit eine Nachstellung vermieden wird.

Eine weitere Lösung der gestellten Aufgabe besteht erfindungsgemäß in den den Patentanspruch 9 kennzeichnenden Merkmalen.

Durch diese erfindungsgemäße Lösung wird sichergestellt, daß bei einem höheren hydraulischen Druck auf jeden Fall die Reibkupplung zum Feststellen der Nachstellelemente betätigt bleibt. Es kann also nicht so sein, daß aufgrund der die Handbremskraft überwiegenden Fußbremskraft die Reibkupplung zu einem Zeitpunkt gelöst wird, bei dem der Bremssattel und die Bremsscheiben erheblichen mechanischen Beanspruchungen und damit beachtlichen elastischen.Dehnungen unterliegen, die bei einem Lösen der Bremse zu dem oben geschilderten Hystereseeffekt führen können. Vielmehr verhält sich das Bremssystem hinsichtlich der Nachstellung nun so, als ob ausschließlich die Handbremse betätigt worden wäre, bei der die Reibkupplung betätigt bleibt und ein Verstellen der Nachstellelemente gegeneinander nicht möglich ist. Dies hat allerdings keine Auswirkung auf die tatsächlich durch die Fußbremse ausgewirkte Bremskraft, die durch die Erfindung nicht vermindert wird. Durch den Einbau des erfindungsgemäßen Stufenkolbens wird somit über die Differenzfläche dieses Kolbens in Verbindung mit dem hydraulischen Druck eine Kraft erzeugt, die verhindert, daß die Kupplung in kritischen Fällen gelöst wird. Das bedeutet, daß keine.Relativbewegung der Nachstellelemente gegeneinander möglich ist und somit keine Nachstellung erfolgen kann.

Eine dritte Lösung der gestellten Aufgabe besteht erfindungsgemäß in den den Patentanspruch 14 kennzeichnenden Merkmale.

Durch die erfindungsgemäße Ausgestaltung wird mit Sicherheit verhindert, daß bei fehlerhafter Betätigung der Bremse (d. h. Fußbremsenbetätigung bei angezogener Handbremse), die die Nachstellung arretierende Reibkupplung erst bei großen Bremskräften gelöst wird, so daß die weiter oben beschriebene Hysterese nicht auftreten kann. Die zum Betätigen des Bremskolbens notwendige Kraft ist nämlich unabhängig von der Stellung der Handbremse durch die Reibkraft des verstellbaren Lagers begrenzt und kann auf geeigneten niedrigen Wert eingestellt werden.

Da die Außenseite der erfindungsgemäßen Lagerung in axialer Richtung verschiebbar ist und die Lagerung in der Regel eine zylinderförmige Gestalt haben wird, empfiehlt sich in vorteilhafter Weiterbildung der Erfindung eine Ausgestaltung nach Anspruch 16, um eine Drehbewegung der Lageraußenseite zu verhindern, die eventuell während einer Längsbewegung der Lageraußenseite auftreten könnte.

Eine einfache Ausgestaltung eines in Kolbenlängsrichtung verschiebbaren Lagers beschreiben die Merkmale nach Anspruch 17. Dabei wird eine gegenüber dem drehbaren anderen Nachstellelement im Gehäuse festgehaltene Hülse durch einen im Gehäuse verankerten Klemmring in Längsrichtung verschiebbar angeordnet, wobei die Hülse die äußere Schale eines Drehlagers, insbesondere Kugellagers, bildet.

Da das Lager aufgrund des Reibschlußes in der jeweiligen Lage verbleibt, in die es aufgrund einer Krafteinwirkung verschoben wurde und da die Bremskräfte hinsichtlich des Lagers immer in Richtung zu dem vorderen Ende des Bremskolbens weisen, ist es notwendig, eine Maßnahme vorzusehen, durch welche das Lager wieder in seine Ausgangslage zurückgeholt werden kann. Hierzu empfiehlt sich eine Ausgestaltung gemäß Anspruch 18.

Ein Ausführungsbeispiel der Erfindung wird nachfolgend anhand der Zeichnung beschrieben. Darin zeigt

Fig. 1 einen Längsschnitt durch einen Teil einer Scheibenbremse mit Nachstellvorrichtung gemäß der ersten Lösung, wobei jedoch lediglich eine Seite der Bremse ohne Belag und ohne Scheibe teilweise dargestellt wurde.

Fig. 2 einen Längsschnitt durch einen Teil einer Scheibenbremse mit Nachstellvorrichtung gemäß der zweiten Lösung, wobei jedoch lediglich eine Seite der Bremse ohne Belag und ohne Scheibe teilweise dargestellt ist. In dieser Figur ist in der in der Zeichnung oberen Hälfte der Teil der Scheibenbremse gemäß dem Stand der Technik dargestellt, während im unteren Teil die erfindungsgemäße Ausführung gezeigt ist, die im wesentlichen durch einen neuartigen Aufbau des bekannten Nachstellkolbens gegeben ist;

Fig. 3 einen Längsschnitt, ähnlich dem der Fig. 2, jedoch mit einer weiteren Ausgestaltung der Nachstellvorrichtung und

Fig. 4 einen Längsschnitt, ähnlich dem der Fig. 2, mit einer dritten Ausgestaltung der Nachstellvorrichtung nach Fig. 2.

Fig. 5 einen Längsschnitt durch einen Teil einer Scheibenbremse mit Nachstellvorrichtung gemäß der dritten Lösung, wobei jedoch lediglich eine Seite der Bremse ohne Belag und ohne Scheibe teilweise dargestellt ist;

Fig. 6 eine geringfügig abgeänderte Version des Ausführungsbeispiels nach Fig.5.

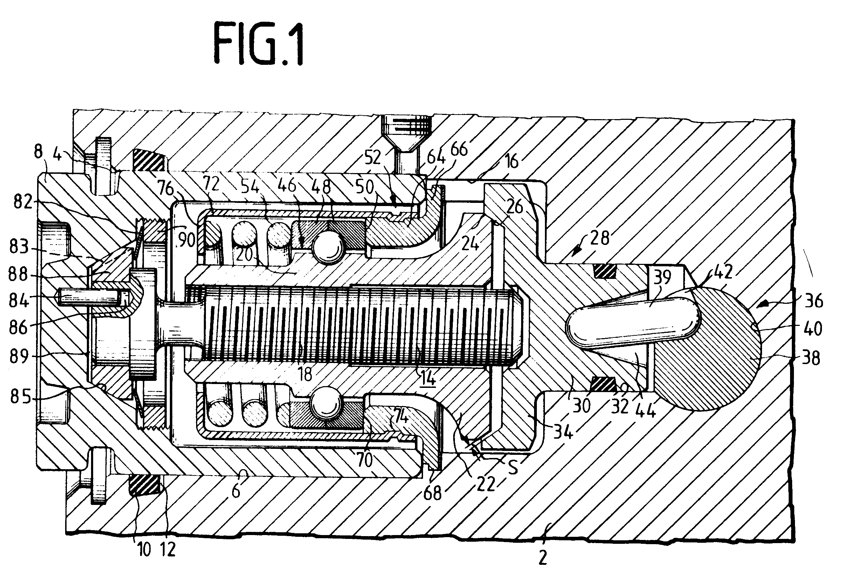

In einem Bremsgehäuse 2 in Fig. 1 ist eine Zylinderbohrung 4 vorgesehen, die im wesentlichen dreifach gestuft ist. Im Bohrungsabschnitt 6 mit dem größten Durchmesser ist ein Bremskolben 8 axial verschiebbar angeordnet. Der Bremskolben 8 ist topfförmig ausgebildet, wobei sein offenes Ende in der Zylinderbohrung 4 angeordnet ist, während sein geschlossenes Ende aus der Zylinderbohrung 4 herausragt, um gegen eine (nicht dargestellte) Bremsbacke zu drücken. zur Abdichtung des Bremskolbens 8 gegenüber der Zylinderbohrung ist in an sich bekannter Weise eine sogen. Roll-back-Dichtung 10 in einer Ringnut 12 des Bremsgehäuses 2 angeordnet, die auch die Rückstellung des Bremskolbens 8 bewirkt.

Am Boden des Bremskolbens 8 ist drehfest eine Nachstellspindel 14 angebracht, die sich koaxial durch den von Bremskolben gebildeten Hohlraum bis in einen Bohrungsabschnitt 16 verringerten Durchmessers erstreckt. Die Nachstellspindel 14 weist ein mehrgängiges, selbsthemmungsfreies Gewinde 18 auf. Ein entsprechendes Gewinde hat eine auf der Nachstellspindel 14 angeordnete Nachstellmutter 20. Die Nachstellmutter hat im wesentlichen zylindrische Gestalt, weist jedoch an ihrem den Kolben abgewandten Ende einen radialen Ansatz 22 auf, der eine konische Reibfläche 24 bildet. Mit der konischen Reibfläche 24 wirkt eine weitere konische Reibfläche 26 zusammen, die an einem Handbremskolben 28 vorgesehen ist. Die Nachstellmutter 20 und der Handbremsbkolben 28 bilden somit zwei Teile einer Reibkupplung. Der Handbremskolben 28 weist einen zylindrischen Abschnitt 30 auf, der in einem Bohrungsabschnitt 32 verringerten Durchmessers verschiebbar angeordnet ist, sowie einen Flanschabschnitt 34, der sich im wesentlichen radial erstreckt und an dem die Reibfläche 26 vorgesehen ist. Der Flanschabschnitt 34 des Handbremskolbens 28 umgreift den radialen Ansatz 22 der Nachstellmutter 20 von außen, wobei zwischen den Reibflächen 24,26 das Funktionslüftspiel S verbleibt.

Außer den Handbremsbkolben 28 weist die mechanische Betätigungseinrichtung noch einen Exzenter 36 auf, der über ein Stößel 39 auf den Handbremskolben 28 einwirkt. Der Exzenter 36 hat eine Welle 38, die in einer quer zur Zylinderbohrung 4 verlaufenden Bohrung 40 drehbar gelagert ist und an der (in nicht dargestellter Weise) ein Handbremshebel fest angbracht ist. In der Welle 38 ist eine Ausnehmung 42 vorgesehen, in der ein Ende des Stößels 39 angeordnet ist. Das andere Ende des Stößels ist in einer im Handbremskolben 28 vorgesehenen Ausnehmung 44 angeordnet. Der den Bremskolben 8 zugewandte Teil der Nachstellmutter 20 trägt ein Dreipunkt- oder ein Vierpunkt-Kugellager 46, dessen innerer Lagerring hier von der Nachstellmutter 20 selbst gebildet wird. Der äußere, entlang einer senkrecht zur Drehachse verlaufenden Ebene zweigeteilte Lagerring 48 des Kugellagers 46 liegt an einer Schulter 50 einer Hülse 52 an, die im Bremsgehäuse 2 befestigt ist, und die sich in axialer Richtung zwischen der Nachstellmutter 20 und der Wandung des Bremskolbens 8 erstreckt. Auf der anderen Seite des äußeren Lagerringes 48 liegt eine Schraubenfeder 54 an, deren anderes Ende sich an einem Flansch 76 abstützt, der am Ende der Hülse 52 ausgebildet ist. Anstelle der Schraubenfeder kann auch eine Tellerfeder bzw. ein Tellerfederpaket verwendet werden. Oder ein anderes, eine bestimmte Kraft abgebendes elastisches Glied (z.B. Gummihülse).

Die hier dargestellte Hülse 52 ist zweiteilig ausgeführt, mit einen ersten Hülsenteil 64, welches einen sich radial erstreckenden Flansch 66 bildet, der in einer Ringnut 68 des Gehäuses 2 befestigt ist. Das erste Hülsenteil 64 bildet an seinem Ende eine Anlagefläche 70 für das Wälzlager 46, gegen die dieses von der Schraubenfeder 54 gedrückt wird. Ein zweites Hülsenteil 72 weist im wesentlichen eine dünnwandige zylindrische Gestalt auf und ist mit dem ersten Hülsenteil mittels Rollieren bzw. Verstemmen verbunden. Das erste Hülsenteil 64 weist dazu wenigstens eine Ausnehmung 74 auf, in die das Material des zweiten Hülsenteiles beim Rollieren bzw. Verstemmen, Verschweißen oder ähnlich, verformt wird. Das zweite Hülsenteil 72 wird dazu auf den Außenumfang des ersten Hülsenteils 64 aufgeschoben. Auf diese Weise wird eine vorteilhafte Einstellmöglichkeit für die Kraft der Feder erreicht, wodurch eine Verbesserung des Wirkungsgrades der Nachstellung erzielt werden kann. Das dem Wälzlager 46 abgewandte Ende der Schraubenfeder 54 liegt an einem nach innen ragenden Flanschabschnitt 76 an, der am zweiten Hülsenteil 72 ausgebildet ist.

Am Boden des Inneren des Bremskolbens 8 ist eine konische Ausnehmung vorgesehen, wobei die konische Seitenfläche 85 dieser Ausnehmung als Anschlag für die Nachstellspindel 14 dient. Auf das in den Kolbenboden ragende Ende der Spindel 14 ist ein Konus 88 aufgesetzt, dessen Mantelfläche der Seitenfläche der Ausnehmung in dem Kolbenboden entspricht, wobei durch den Konus das Ende der Spindel 14 zentrisch in dem Kolbenboden gehalten wird.

Ein in dem Kolbenboden verankerter Stift 84 greift in eine Bohrung 86 in dem Spindelende ein und sichert die Spindel 14 gegen Verdrehen gegenüber dem Kolben 8. Eine Tellerfeder 82 greift mit ihren inneren Bereich an der Nachstellspindel 14 an und stützt sich mit ihrem äußeren Bereich an einem ringförmigen Ansatz 90 ab, welcher mit der Innenfläche des Bremskolbens 8 fest verbunden ist. Die Tellerfeder 82 versucht dabei, die Nachstellspindel gegen den Boden des Kolbens zu drücken, wobei in der Normalstellung der Nachstellvorrichtung die Mantelfläche des Konus 88 an der konischen Innenwand 85 der Ausnehmung 89 anschlägt. Die Mantelfläche des Konus kann mit auf der Mantelfläche verteilten Nuten 83 versehen sein, die für eine verbesserte Anlage der beiden konischen Flächen gegeneinander sorgen.

Der ringförmige Ansatz kann beispielsweise als Sicherungsring in eine entsprechende Ringnut in Kolbeninneren angesetzt sein, oder aber auch durch einen Preßring gebildet sein. Eine weitere Möglichkeit bildet ein Schraubring mit Außengewinde, der in ein entsprechendes Gewinde in dem Kolbeninneren angeschraubt ist.

Die Wirkungsweise der Erfindung ist nun wie folgt.

In Normalzustand der Nachstellvorrichtung besteht zwischen den Flächen 24 und 26 ein Spiel S, während durch die Feder 82 das konusförmige Ende der Nachstellspindel 14 an den Anschlag 85 anliegt. Wird nun durch einen entsprechenden hydraulischen Druck im Inneren des Kolbens 8 bei der Fußbremsung dieser in der Zeichnung nach links bewegt, so bleibt aufgrund der Kraftwirkung der Feder 82 der Konus 88 mit seiner Seitenwand am Anschlag 85 und die Nachstellspindel 14 wird hierdurch mit den Kolben 8 mitgeführt. Als Folge davon wird die Spindel 14 durch die herbeigeführte Drehbewegung der Nachstellmutter 20 aus dieser Mutter herausgedreht, wobei sich die Nachstellspindel 14 in axialer Richtung in der Zeichnung nach links bewegt, aber nicht dreht. Der Abstand der Flächen 24,26 verändert sich hierbei nicht. Nach den Nachlassen des Druckes wird durch die Spannkräfte innerhalb der Bremse und die Roll-back-Wirkung der Dichtung 10 der Kolben 8 in seine Ausgangsstellung zurückgefahren, wobei die Spindel 14 in die sich drehende Nachstellmutter 20 hineingeschraubt wird.

Bei Betätigung der Handbremse wird der Stößel 39 aufgrund einer entsprechenden Drehbewegung der Welle 38 nach links verschoben, so daß der Handbremskolben mit seiner Fläche 26 in Eingriff mit der Fläche 24 der Nachstellmutter gelangt, nachdem das Spiel S überwunden ist. Da nunmehr durch die Reibkupplung 24,26 eine Drehbewegung der Mutter ausgeschlossen ist, wird die von der Welle 38 ausgehende Kraft über den Stößel 39, den Handbremskolben 28, die Nachstellmutter 20 und die Nachstellspindel 14 auf den Boden des Bremskolbens 8 übertragen. Nach dem Ende der Kraftwirkung über die Welle 38 wird der Bremskolben durch die Roll-back-Wirkung der Dichtung 10 und die Entspannungswirkung innerhalb der Bremse in der Zeichnung nach rechts zurückgedrückt und der Handbremskolben 28 bei Beginn einer neuen Fußbremsung in seine Ausgangslage gebracht.

Wird nun in unvorschriftsmäßiger Weise die Fußbremse bei angezogener Handbremse betätigt, so wird auf das Innere des Bremskolbens 8 ein hydraulischer Druck ausgeübt, während die Reibkupplung 24,26 geschlossen und damit kein Spiel S vorhanden ist. Aufgrund des hydraulischen Druckes beginnt der Kolben über die Wirkung der Feder 82 an der Spindel 14 zu ziehen, wobei diese Kraft aber nach Überwindung des Gewindespiels voll auf die Nachstellmutter 20 übertragen wird. Die Arretierung dieser Mutter verhindert aber ein Nachstellen, so daß die auf das Gewinde ausgeübte Kraft immer größer wird, bis schließlich die Tellerfeder 82 nachgibt und sich der Kolben 8 von dem Spindelkonus 88 entfernt. Dabei muß die Kraft der Tellerfeder 82 so schwach gewählt sein, daß sie um den notwendigen Bremsweg nachgibt, bevor die Spiralfeder 54 nachgibt und über das Wälzlager 46 die Nachstellspindel 20 von der Reibfläche 26 abgehoben wird und dann durch eine Drehbewegung nachstellen kann.

Um den Weg der Feder 82 zu begrenzen, ist vorgesehen, den ringförmigen Ansatz 90 als Anschlag zu verwenden und dieser Anschlag wird dadurch wirksam, daß durch die Kraft der Kolbenbewegung und der dieser entgegenwirkenden Kraft der Feder 54 der äußere Bereich der Tellerfeder 82 auf den weit in das Innere des Kolbens ragenden Ansatz flach aufliegt, so daß die Fläche der Tellerfeder 82 etwa parallel zu der Stirnfläche des Ansatzes 90 verläuft, an der sich die Tellerfeder 82 abstützt.

Selbst, wenn ausnahmsweise für diesen Fall bei besonders großer Fußbremsung über die Anschlagwirkung der Feder 82 die Reibkupplung 24,26 gelöst und die Nachstellung vorgenommen werden sollte, so bedeutet dieses keine Gefahr, da nach dem Ende der Fußbremsung immer ein hinreichendes Spiel zum Zurückfahren des Kolbens 8 zur Verfügung steht, wenn sich die Feder 82 in ihre Ausgangslage zurückbewegt und die Nachstellspindel 18 auf diesem Weg sich wieder an den Anschlag 85 anlegt.

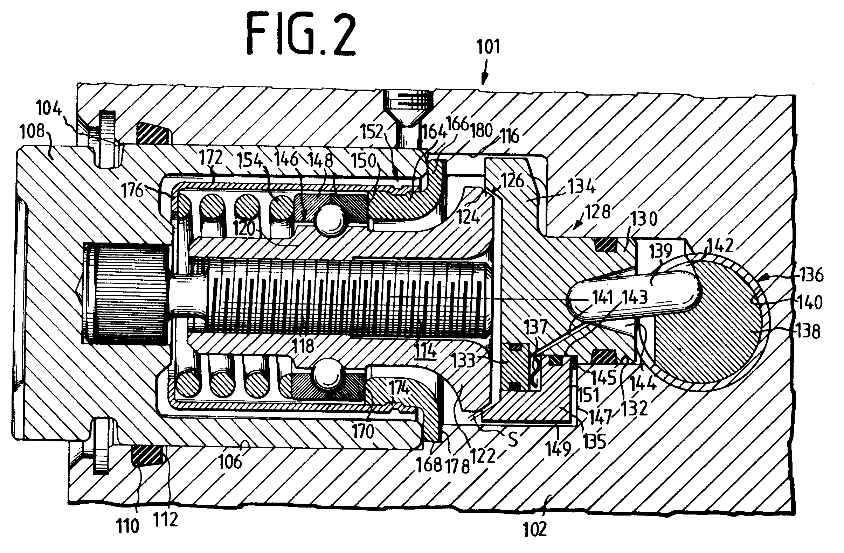

Es wird als nächstes auf die Fig. 2 Bezug genommen, die einen Längsschnitt durch einen Teil einer Scheibenbremse mit einer Nachstellvorrichtung gemäß der zweiten Lösung zeigt. In einem Bremsgehäuse 102 ist eine Zylinderbohrung 104 vorgesehen, die im wesentlichen dreifach gestuft ist. Im Bohrungsabschnitt 106 mit dem größten Durchmesser ist ein Bremskolben 108 axial verschiebbar angeordnet. Der Bremskolben 108 ist topfförmig ausgebildet, wobei sein offenes Ende in der Zylinderbohrung 104 angeordnet ist, während sein geschlossenes Ende aus der Zylinderbohrung 104 herausragt, um gegen eine (nicht dargestellte) Bremsbacke zu drücken. Zur Abdichtung des Bremskolbens 108 gegenüber der Zylinderbohrung ist in an sich bekannter Weise eine sogen. Roll-back-Dichtung 110 in einer Ringnut 112 des Bremsgehäuses 102 angeordnet, die auch die Rückstellung des Bremskolbens 108 bewirkt.

Am Boden des Bremskolbens 108 ist drehfest eine Nachstellspindel 114 angebracht, die sich koaxial durch den vom Bremskolben gebildeten Hohlraum bis in einen Bohrungsabschnitt 116 verringerten Durchmessers erstreckt. Die Nachstellspindel 114 weist ein mehrgängiges, selbsthemmungsfreies Gewinde 118 auf. Ein entsprechendes Gewinde hat eine auf der Nachstellspindel 114 angeordnete Nachstellmutter 120. Die Nachstellmutter hat im wesentlichen zylindrische Gestalt, weist jedoch an ihrem dem Kolben abgewandten Ende einen radialen Ansatz 122 auf, der eine konische Reibfläche 124 bildet.

Mit der konischen Reibfläche 124 wirkt eine weitere konische Reibfläche 126 zusammen, die an einem Handbremskolben 128 vorgesehen ist. Die Nachstellmutter 120 und der Handbremskolben 128 bilden somit zwei Teile einer Reibkupplung. Der Handbremskolben 128 weist einen zylindrischen Abschnitt 130 auf, der in einem Bohrungsabschnitt 132 verringerten Durchmessers verschiebbar angeordnet ist, sowie einen Flanschabschnitt 134, der sich im wesentlichen radial erstreckt und an dem die Reibfläche 126 vorgesehen ist. Der Flanschabschnitt 134 des Handbremskolbens 128 umgreift den radialen Ansatz 122 der Nachstellmutter 120 von außen, wobei zwischen den Reibflächen 124,126 das Funktionslüftspiel S verbleibt.

Außer den Handbremsbkolben 128 weist die mechanische Betätigungseinrichtung noch einen Exzenter 136 auf, der über ein Stößel 39 auf den Handbremskolben 128 einwirkt. Der Exzenter 136 hat eine Welle 138, die in einer quer zur Zylinderbohrung 104 verlaufenden Bohrung 140 drehbar gelagert ist und an der (in nicht dargestellter Weise) ein Handbremshebel fest angebracht ist. In der Welle 138 ist eine Ausnehmung 142 vorgesehen, in der ein Ende des Stößels 139 angeordnet ist. Das andere Ende des Stößels ist in einer im Handbremskolben 128 vorgesehenen Ausnehmung 144 angeordnet. Der dem Bremskolben 108 zugewandte Teil der Nachstellmutter 120 trägt ein Dreipunkt- oder ein Vierpunkt-Kugellager 146, dessen innerer Lagerring hier von der Nachstellmutter 120 selbst gebildet wird. Der äußere, entlang einer senkrecht zur Drehachse verlaufenden Ebene zweigeteilte Lagerring 148 des Kugellagers 146 liegt an einer Schulter 150 einer Hülse 152 an, die im Bremsgehäuse 102 befestigt ist, und die sich in axialer Richtung zwischen der Nachstellmutter 120 und der Wandung des Bremskolbens 108 erstreckt. Auf der anderen Seite des äußeren Lagerringes 148 liegt eine Schraubenfeder 154 an, deren anderes Ende sich an einem Flansch 176 abstützt, der an Ende der Hülse 152 ausgebildet ist. Anstelle der Schraubenfeder kann auch eine Tellerfeder bzw. ein Tellerfederpaket verwendet werden, oder ein anderes, eine bestimmte Kraft abgebendes elastisches Glied (z.B. Gummihülse).

Die hier dargestellte Hülse 152 ist zweiteilig ausgeführt, mit einen ersten Hülsenteil 164, welches einen sich radial erstreckenden Flansch 166 bildet, der im Gehäuse 112 verstemmt ist. Das erste Hülsenteil 164 bildet an seinem Ende eine Anlagefläche 170 für das Wälzlager 146, gegen die dieses von der Schraubenfeder 154 gedrückt wird. Ein zweites Hülsenteil 172 weist im wesentlichen eine dünnwandige zylindrische Gestalt auf und ist mit dem ersten Hülsenteil mittels Rollieren bzw. Verstemmen verbunden. Das erste Hülsenteil 164 weist dazu wenigstens eine Ausnehmung 174 auf, in die das Material des zweiten Hülsenteiles beim Rollieren bzw. Verstemmen, Verschweißen oder ähnlich, verformt wird. Das zweite Hülsenteil 172 wird dazu auf den Außenumfang des ersten Hülsenteils 164 aufgeschoben. Auf diese Weise wird eine vorteilhafte Einstellmöglichkeit für die Kraft der Feder erreicht, wodurch eine Verbesserung des Wirkungsgrades der Nachstellung erzielt werden kann. Das dem Wälzlager 146 abgewandte Ende der Schraubenfeder 154 liegt an einem nach innen ragenden Flansch 176 an, der am zweiten Hülsenteil 172 ausgebildet ist.

Zur Einstellung des Funktionsspieles S wird bei der Montage zunächst der Handbremskolben 128 in das Gehäuse eingesetzt. Es wird dann der Abstand zwischen einem Bezugspunkt auf der Reibfläche 126 und der sich radial erstreckenden Wand 178 der Nut 168 gemessen. Der sich dabei ergebende Differenzwert zu einer Sollabmessung wird dadurch ausgeglichen, daß zwischen die Wand 178 und den Flansch 166 wenigstens eine entsprechende Scheibe 180 eingelegt wird. Die Anlagefläche 170 des ersten Hülsenteils 164 und damit die axiale Position des Wälzlagers 146 bzw. der Nachstellmutter 120 verschiebt sich dadurch in axialer Richtung auf das vorbestimmte Sollmaß. Die Ausgleichsscheiben 180 sind in gestaffelten Größen vorhanden, so daß in Normalfall der Einsatz nur einer Scheibe erforderlich ist. Gegebenenfalls kann die erforderliche Ausgleichsabmessung jedoch auch durch Kombination mehrerer Scheiben erreicht werden. Dies gilt auch für die im folgenden beschriebenen Ausführungsbeispiele, sofern bei diesen Ausgleichsscheiben verwendet werden.

Die erfinderische Ausgestaltung der Nachstellvorrichtung weist nun einen verlängerten Bohrungsabschnitt 116 auf, welcher Raum schafft für einen Stufenkolben 135. Dieser Stufenkolben hat im wesentlichen becherförmige Gestalt und besitzt in seiner Stirnfläche eine zentrale Durchgangsbohrung 143. Die durch diese Durchgangsbohrung gebildete ringförmige Innenfläche des Stufenkolbens ist auf der Außenfläche des Handbremskolbens 128 verschiebbar gelagert. Dabei kann die Durchgangsbohrung 143 im wesentlichen den gleichen Durchmesser wie der zylindrische Abschnitt 130 des Handbremskolbens 128 haben oder aber auch in eine Ringnut des zylindrischen Abschnitts 130 eingesetzt sein. Wesentlich ist, daß mit Hilfe eines Sicherungsringes 145, einer Stufenbohrung oder einer anderen dem Fachmann geläufigen Maßnahme dafür gesorgt ist, daß die Stirnfläche des Stufenkolbens 135 nicht unmittelbar an den Boden 147 des Bohrungsabschnitts 116 aufsetzen kann, sondern. immer ein Zwischenraum verbleibt, so daß der im Inneren des Bremskolbens 108 herrschende hydraulische Druck sich über einen Abstandsraum 149 auf die Stirnfläche 151 des Stufenkolbens 135 auswirken kann. Auf den inneren Boden des Stufenkolbens 135 wirkt eine Feder 137, die sich an einem Verschlußteil 133 abstützt. Das Verschlußteil 133 ist am vorderen Ende des Handbremskolbens 128 gelagert und durch einen Sicherungsring oder durch eine andere geeignete Maßnahme daran gehindert, das vordere Ende des Handbremskolbens 128 in Richtung zu dem geschlossenen Ende des Bremskolbens 108 zu verlassen. Das Verschlußteil 133 ist sowohl in Richtung zu dem Handbremskolben 128 als auch in Richtung zu der Innenwand des Stufenkolbens 135 durch Dichtungsringe abgedichtet, so daß der im Innenraum des Kolbens 118 herrschende hydraulische Druck den die Feder 137 unmittelbar umgebenden Raum nicht erreichen kann. Dieser Raum ist vielmehr durch eine Ausgleichsbohrung 141 auf dem in der Umgebung herrschenden Außendruck gehalten. Das Verschlußteil 133 kann mit dem vorderen Ende des Handbremskolbens 128 über einen Preßsitz oder z.B. eine Taumelnietung fest verbunden sein. Weiterhin ist sichergestellt, daß der Stufenkolben 135 gegenüber den Handbremskolben 128 eine radiale Verdrehsicherung besitzt, so daß sich der Stufenkolben 135 gegenüber den Gehäuse 112 bzw. dem Kolben 118 nicht verdrehen kann.

Wesentliche Aufgabe des Verschlußteiles ist es, dafür zu sorgen, daß der in den Inneren des Kolbens 108 herrschende hydraulische Druck einen Teil der Oberfläche des Stufenkolbens 135 nicht erreichen kann. Hierdurch ist die für den hydraulischen Druck an der Vorderseite und der Rückseite erreichbare Fläche unterschiedlich groß. Durch diese Differenzfläche wirkt eine von dem Innendruck im Kolben 108 abhängige Kraft in Längsrichtung des Kolbens 118 auf den Stufenkolben 135 ein und kann diesen in Abhängigkeit von den hydraulischen Druck in Längsrichtung des Kolbens 108 nach Überwindung der Kraft der Feder 137 bewegen.

Im unteren Druckbereich wird nun die Anordnung nach Fig. 2 im Zusammenhang mit der DE-OS 33 36 120 beschrieben. Dieser Druckbereich liegt etwa bei einer Höhe von 5 bis 10 bar. In diesem Druckbereich sind zwei Fälle zu unterscheiden. Zum einen kann die Handbremse ihre normale gelöste Stellung haben. In diesem Falle ist das Spiel S größer Null, und die Nachstellmutter 120 kann sich beim Herausfahren des Kolbens 108 sofort anfangen zu drehen, so daß die Spindel 118 aus der drehenden Mutter 120 herausgefahren wird. Die Nachstellung der Nachstelleinrichtung bei der Rückwärtsbewegung des Kolbens 108 aufgrund des Verschleißes von Belägen und ähnlichem erfolgt hier in der üblichen Weise.

Ist nun die Handbremse beim Auftreten eines wachsenden hydraulischen Druckes (Fußbremsbetätigung) mehr oder weniger stark angezogen, so wird das Spiel S an den Reibflächen 124 und 126 zu Null. Ein Drehen der Nachstellmutter 120 gegenüber dem Gewinde 118 ist somit bei Auswärtsbewegung des Kolbens 108 nicht möglich. Der Kolben 108 versucht somit, über die Spindel 118 die Nachstellmutter 120 entgegen der Kraft der Schraubenfeder 154 vom Handbremskolben 28 wegzuziehen. In der Regel ist diese fehlerhafte Betätigung des Bremssystems unkritisch, da entweder die Handbremse so leicht angezogen ist, daß sich die Nachstellmutter schon bei geringem hydraulischem Druck von dem Handbremskolben 128 lösen kann und damit ein Fall gegeben ist, wie er bei dem Fußbremsen bei vorschriftsmäßig gelöster Handbremse sich einstellt. Auch die Fußbremsung bei kräftig angezogener Handbremse ist hinsichtlich der Nachstellung unkritisch, da in diesem Falle auch bei dem Auftreten größeren hydraulischen Fußbremsdruckes die Reibkupplung zwischen den Flächen 124 und 126 nicht gelöst wird. Somit drehen sich Spindel 118 und Mutter 120 bei der Fußbremsung nicht gegeneinander, so daß nach Lösen der Fußbremse der ursprüngliche Zustand der Nachstellung wieder hergestellt ist.

Allerdings ist auch nicht auszuschließen, daß die Handbremse während der Fußbremsung gerade derart angezogen ist, daß beim Auftreten erheblichen hydraulischen Drucks die Nachstellmutter 120 gegenüber der Reibfläche des Handbremskolbens 128 zuschlüpfen beginnt, wobei die Bremsbeläge und der Sattel wegen des auftretenden hohen Drucks und der dadurch bedingten Verspannungskräfte beachtlichen mechanischen Dehnungen unterliegen können. Wegen der Kraftumkehr beim Lösen der Fußbremse wird die Nachstellmutter 120 in einer anderen Lage verriegelt, als sie beim Lösen der Nachstellmutter 120 eingenommen hatte. Faktisch kann also durch die Verspannkräfte am Sattel und an den Bremsbelägen eine im Sinne einer geringfügigen Nachstellung wirkende Hysterese in der Nachstellvorrichtung auftreten, die zwar rückgängig gemacht wird, wenn beim nächsten Mal vorschriftsmäßig mit gelöster Handbremse gebremst wird, sich aber auch schrittweise im Sinne einer Nachstellung addieren kann, falls die Hysteresewirkung mehrfach hintereinander auftritt.

Die Wirkungsweise der Erfindung besteht nun darin, die Hysteresewirkung der Nachstelleinrichtung bei größererem hydraulichem Druck mit Sicherheit zu verhindern.

Wird die Fußbremse bei vorschriftsmäßig gelöster Handbremse betätigt, so arbeitet die erfindungsgemäß ausgestaltete Nachstellanordnung wie bei der vorbekannten Ausführungsform beschrieben. Durch den hydraulischen Druck der Fußbremse wird der Handbremskolben 128 in Fig. 2 so weit nach rechts verschoben, daß ein Spiel zwischen der Vorderkante und des Stufenkolbens 135 und damit der Reibfläche 126 sowie der Reibfläche 124 der Nachstellmutter 120 auftritt. Dieses Spiel ist so groß, daß es auch bei maximalem Fußbremsdruck erhalten bleibt. Die Nachstellmutter kann sich somit über den gesamten Zeitraum frei bewegen, wie weiter oben schon im Zusammenhang mit der vorbekannten Anordnung beschrieben.

Auch bei hart angezogener Handbremse unterscheiden sich die Vorgänge nicht gegenüber denen, wie sie im Zusammenhang mit der bekannten Ausgestaltung der Nachstellvorrichtung angegeben wurden. Der Stufenkolben 135 wird in diesem Falle unterstützt durch die Wirkung des Sicherungsringes oder einer anderen Maßnahme so weit durch den Handbremskolben 128 nach vorn gehalten, daß die Reibflächen 124 und 126 während der gesamten Bremszeit gegeneinander verspannt bleiben, so daß eine Nachstellung nicht möglich ist.

Im Gegensatz zu dem weiter oben beschriebenen kritischen Fall einer "mittelstarken" Handbremsbetätigung kann aber bei der Erfindung der Handbremskolben 128 nicht mehr bei höherem Druck von der Reibfläche 124 der Nachstellmutter 120 getrennt werden. Dieser höhere Druck wirkt nämlich nicht nur auf den Innenraum des Kolbens 108, sondern auch auf die gesamte Rückfläche des Stufenkolbens 135. Die für den hydraulischen Druck wirksame Fläche auf der Rückseite des Stufenkolbens ist größer als die wirksame Fläche auf der Vorderseite, da diese durch die Wirkung des Verschlußteils 133 und des dahinter liegenden, unter atmosphärischem Druck stehenden Raums vermindert wird. Die Bewegung des Stufenkolbens 135 in Bewegungsrichtung des Kolbens 108 wird somit bestimmt durch die in der Zeichnung dargestellte Strecke 10B, die Kraft der Feder 137 sowie den auf den Stufenkolben 135 wirkenden Druck. Bei geeigneter Abstimmung dieser Parameter läßt sich erreichen, daß in dem genannten kritischen Fall der Stufenkolben 135 ständig unter Kraft auf der Nachstellmutter 120 gehalten und dieser in ihrer Bewegungsrichtung nachgeführt wird. Der Eingriff der beiden Reibflächen 124, 126 bleibt also auch unter diesen kritischen Randbedingungen ständig erhalten ohne die Bremsung durch den Bremskolben 108 zu behindern. Die wesentliche Wirkung der Erfindung besteht daher darin, daß für den Fall, daß die Reibkupplung sich einmal im Eingriff befindet, diese auch bei wachsendem hydraulischem Druck nicht mehr durch eine Axialbewegung der Nachstellmutter 120 gelöst werden kann. Die Erfindung läßt sich weiterhin ohne Schwierigkeiten derart dimensionieren, daß unabhängig von der Stellung der Handbremse im höheren Druckbereich des hydraulischen Drucks die Nachstellmutter auf jeden Fall von dem Stufenkolben 135 festgehalten wird, so daß eine Nachstellung bei großem hydraulischem Druck nicht möglich ist.

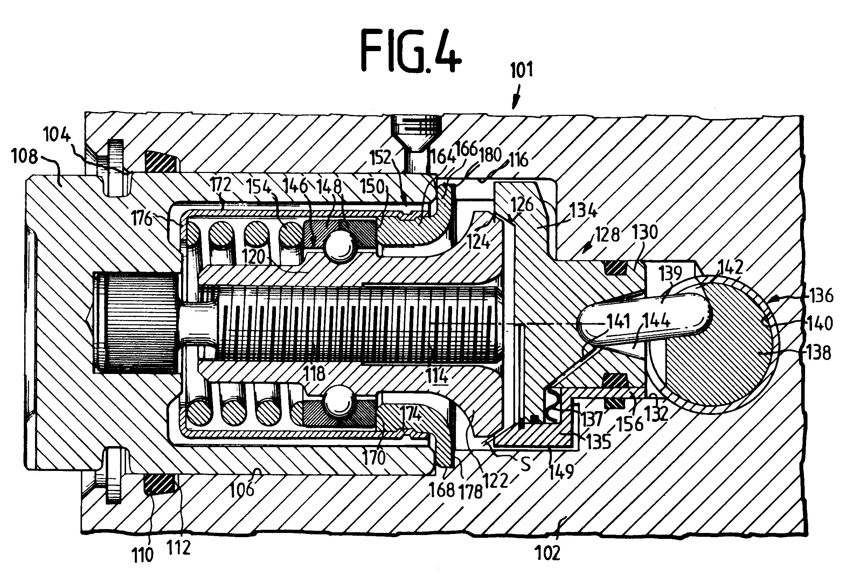

In Fig. 4 ist eine etwas abgeänderte Ausgestaltung gezeigt. Dabei wird wiederum durch die Vertiefung des Bohrungsabschnittes 116 Raum für die Aufnahme des Stufenkolbens 135 geschaffen. Die Feder 37 stützt sich an ihrer Innenseite an dem Sicherungsring 145 ab und drückt mit ihrer Außenseite den Stufenkolben 135 gegen eine Schulter 153 in dem Handbremskolben 128. Das Verschlußteil 133 ist fest und druckdicht im vorderen Teil des Bohrungsabschnittes 116 angeordnet. Der Stufenkolben ist mit seinem vorderen Teil auf der Innenfläche des Verschlußteils 133 und mit seinem hinteren Teil auf der Innenfläche des Bohrungsabschnitts 116 geführt und mit Hilfe von Dichtungsringen gegen die Führungsflächen abgedichtet. Durch eine Druckausgleichsbohrung 155 wird der hydraulische Druck im Innenraum des Kolbens 108 auf die Rückfläche des Stufenkolbens 135 geführt. Die Ausgleichsbohrung 141 sorgt dafür, daß ein Teil der Vorderfläche des Stufenkolbens 135 mit dem Außendruck beaufschlagt wird, wobei die Größe dieser Fläche durch die Höhe des Ausgleichsstücks 133 bestimmt ist. In dem Gehäuse können in axialer Richtung verlaufende Nuten vorgesehen sein, in denen entsprechende Vorsprünge des Stufenkolbens eingreifen. Hierdurch wird sicher eine axiale Drehung des Stufenkolbens verhindert.

Die Wirkungsweise dieses Aufbaus unterscheidet sich im Prinzip nicht von der im Zusammenhang mit Fig. 2 geschilderten und soll daher an dieser Stelle nicht wiederholt werden.

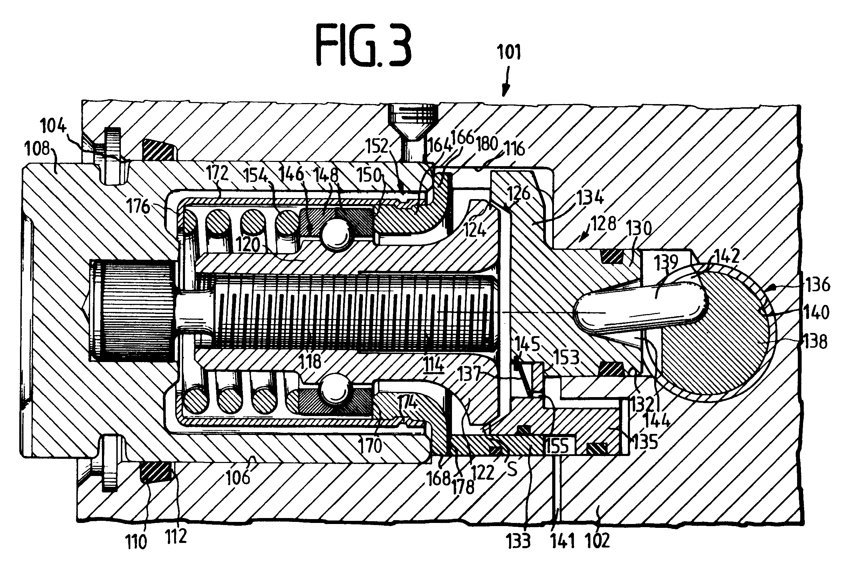

Die in Fig. 3 dargestellte Ausführungform unterscheidet sich von der in Fig. 2 gezeigten u.a. dadurch, daß auf die Verwendung eines Verschlußteils 133 verzichtet wurde und dieses durch einen entsprechenden Ansatz in dem Handbremskolben 128 verwirklicht wurde. Um eine bessere Führung des Stufenkolbens 135 zu erreichen, wurde dieser in Höhe seiner Durchgangsbohrung 143 nach Fig. 2 mit einem sich in Richtung zur Welle 138 erstreckenden ringförmigen Ansatz 156 versehen, welcher in den Zwischenraum zwischen die Außenfläche des Handbremskolbens 128 und die Innenfläche des Bohrungsabschnitts 132 reicht und durch in diese Flächen eingelassene Dichtungsringe gegenüber der Bohrung 140 abgedichtet ist. Über den Abstandsraum 149 gelangt, entsprechend der Ausgestaltung nach Fig. 2, der Druck im Innenraum des Kolbens 108 an die rückwärtige Fläche des Stufenkolbens 135. Der für die Heranführung des Druckes notwendige Abstand kann, wie in Fig. 2 z.B. durch einen entsprechenden Ansatz an dem Boden der Bohrung 132 bewirkt werden.

Die Wirkung der Ausgestaltung nach Fig. 3 entspricht der im Zusammenhang mit Fig. 2 beschriebenen.

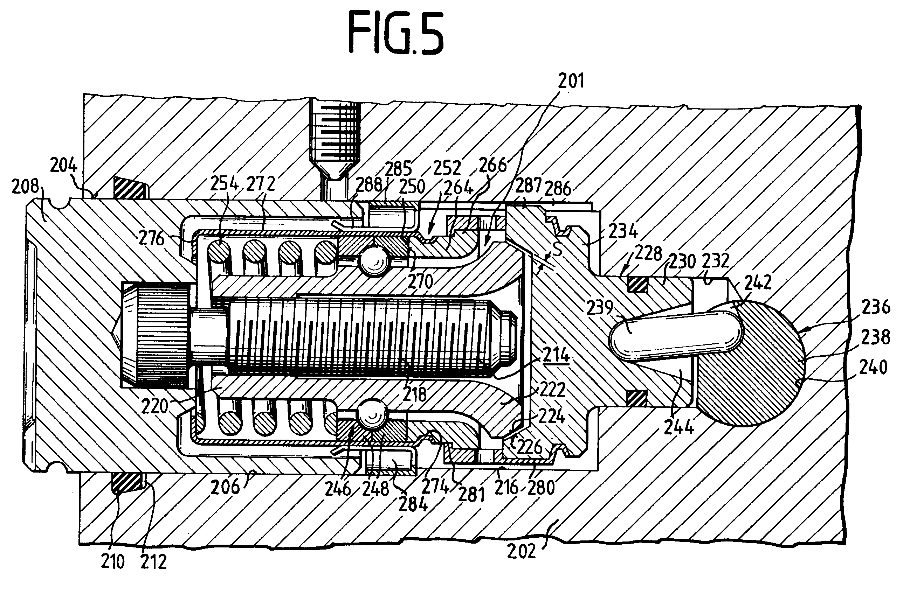

Es wird nunmehr auf die Fig. 5 Bezug genommen, die einen Längsschnitt durch einen Teil einer Scheibenbremse mit einer Nachstellvorrichtung zeigt. In einem Bremsgehäuse 202 ist eine Zylinderbohrung 204 vorgesehen, die im wesentlichen dreifach gestuft ist. Im Bohrungsabschnitt 206 mit dem größten Durchmesser ist ein Bremskolben 208 axial verschiebbar angeordnet. Der Bremskolben 208 ist topfförmig ausgebildet, wobei sein offenes Ende in der Zylinderbohrung 204 angeordnet ist, während sein geschlossenes Ende aus der Zylinderbohrung 204 herausragt, um gegen eine (nicht dargestellte) Bremsbacke zu drücken. Zur Abdichtung des Bremskolbens 208 gegenüber der Zylinderbohrung ist in an sich bekannter Weise eine sogen. Roll-back-Dichtung 210 in einer Ringnut 212 des Brensgehäuses 202 angeordnet, die auch die Rückstellung des Bremskolbens 208 bewirkt.

Am Boden des Bremskolbens 208 ist drehfest eine Nachstellspindel 214 angebracht, die sich koaxial durch den vom Bremskolben gebildeten Hohlraum bis in einen Bohrungsabschnitt 16 verringerten Durchmessers erstreckt. Die Nachstellspindel 214 weist ein mehrgängiges, selbsthemmungsfreies Gewinde 218 auf. Ein entsprechendes Gewinde hat eine auf der Nachstellspindel 214 angeordnete Nachstellmutter 220. Die Nachstellmutter hat im wesentlichen zylindrische Gestalt, weist jedoch an ihrem den Kolben abgewandten Ende einen radialen Ansatz 222 auf, der eine konische Reibfläche 224 bildet.

Mit der konischen Reibfläche 224 wirkt eine weitere konische Reibfläche 226 zusammen, die an einen Handbremskolben 228 vorgesehen ist. Die Nachstellmutter 220 und der Handbremskolben 228 bilden somit zwei Teile einer Reibkupplung. Der Handbremskolben 228 weist einen zylindrischen Abschnitt 230 auf, der in einem Bohrungsabschnitt 232 verringerten Durchmesser verschiebbar angeordnet ist, sowie einen Flanschabschnitt 234, der sich in wesentlichen radial erstreckt und an den die Reibfläche 226 vorgesehen ist. Der Flanschabschnitt 234 des Handbremskolbens 228 umgreift den radialen Ansatz 222 der Nachstellmutter 220 von außen, wobei zwischen den Reibflächen 224,226 das Funktionslüftspiel S verbleibt.

Außer den Handbremskolben 228 weist die mechanische Betätigungseinrichtung noch einen Exzenter 236 auf, der über ein Stößel 239 auf den Handbremskolben 228 einwirkt. Der Exzenter 236 hat eine Welle 238, die in einer quer zur Zylinderbohrung 204 verlaufenden Bohrung 240 drehbar gelagert ist und an der (in nicht dargestellter Weise) ein Handbremshebel fest angebracht ist. In der Welle 238 ist eine Ausnehmung 242 vorgesehen, in der ein Ende des Stößels 239 angeordnet ist. Das andere Ende des Stößels ist in einer in Handbremskolben 228 vorgesehenen Ausnehmung 244 angeordnet. Der dem Bremskolben 208 zugewandte Teil der Nachstellmutter 220 trägt ein Dreipunkt- oder ein Vierpunkt-Kugellager 246, dessen innerer Lagerring hier von der Nachstellmutter 220 selbst gebildet wird. Der äußere, entlang einer senkrecht zur Drehachse verlaufenden Ebene zweigeteilte Lagerring 248 des Kugellagers 246 liegt an einer Schulter 250 eines ersten Hülsenteils 264 an, die sich in axialer Richtung zwischen der Nachstellmutter 220 und der Wandung des Bremskolbens 208 erstreckt.

Die hier dargestellte Hülse 252 ist zweiteilig ausgeführt, mit einem ersten Hülsenteil 264, welches einen sich radial erstreckenden Flansch 266 bildet. Das erste Hülsenteil 264 bildet an seinem Ende eine Anlagefläche 270 für das Wälzlager 246, gegen die dieses von einem zweiten Hülsenteil 272 gedrückt wird. Das zweite Hülsenteil 272 weist im wesentlichen eine dünnwandige zylindrische Gestalt auf und ist mit dem ersten Hülsenteil mittels Rollieren bzw. Verstemmen verbunden. Das erste Hülsenteil 64 weist dazu wenigstens eine Ausnehmung 274 auf, in die das Material des zweiten Hülsenteiles beim Rollieren bzw. Verstemmen, Börderln, Verschweißen oder ähnlich, verformt wird. Das zweite Hülsenteil 272 wird dazu auf den Außenumfang des ersten Hülsenteils 264 aufgeschoben.

Die Hülse 252 kann gegenüber der Zylinderbohrung 204 mittels einer Klemmhülse 284 gehalten werden und die in ihr befestigte Hülse 252 läßt sich gegen Verdrehen gesichert in axialer Richtung führen. Eine andere, einfachere Möglichkeit besteht darin, auf den Absatz 285 zu verzichten und die Klemmhülse, wie weiter unten beschrieben, mit hinreichender Festigkeit in die Bohrung 204 einzupressen.

Der innere Schenkel der Klemmhülse 284 stützt sich mit der Innenseite 288 federnd an der Hülse 252 ab, welche das Drehlager für die Nachstellmutter 220 umfaßt.

In den Ausführungsbeispiel ist vorgesehen, daß der äußere Schenkel der Klemmhülse 284 in der Gewindebohrung 204 fest verankert ist, während das Lager unter der Hülse 252 zusammen mit dieser entlang der Innenfläche 288 des inneren Hülsenschenkels axial verschiebbar ist, sobald die entsprechende Kraft aufgewendet wird, welche die durch die Klemmhülse 284 ausgeübte Reibkraft überwindet.

Der Handbremskolben 228 besitzt weiterhin noch einen Kolbenansatz 287, welcher in die Längsnut 286 ragt und den Handbremskolben 228 vor Verdrehen sichert, ohne ihn an einer Längsbewegung innerhalb der Zylinderbohrung 204 zu hindern.

An dem Handbremskolben 228 ist in ähnlicher Weise, wie die Hülse 252 auf dem ersten Hülsenteil 264, eine Transporthülse 280 befestigt, welche sich mit ihrem vorderen Ende in Richtung Bremskolben 208 erstreckt. Die Transporthülse 280 trägt an der bremskolbenseitigen Vorderkante einen ringförmigen Anschlag 281, welcher hinter dem Flansch 266 greift, wodurch der Handbremskolben 228 gegebenenfalls die Hülse 252 und damit das Wälzlager 246 in Richtung zur Welle 238 zu ziehen vermag. Die Innenfläche des Vorderendes der Transporthülse 280 ist gegenüber der Außenfläche des Flansches 266 frei bewegbar, so daß sich der Handbremskolben 228 in Fig. 1 nach links zu bewegen vermag, ohne eine Kraft auf den Flansch 266 und damit die Hülse 252 auszuüben, so lange noch kein Eingriff zwischen den Handbremskolben 228 und der Nachstellmutter 220 besteht.

Wird die Fußbremse betätigt, so steigt der Druck in dem Innenraum des Kolbens 208, so daß der Bremskolben 208 in der Zeichnung nach links und der Handbremskolben 228 nach rechts bewegt werden. Der Handbremskolben 228 gelangt so in seine Ausgangslage und nimmt dabei die Hülse 252 mit nach rechts, indem der Anschlag 281 den Flansch 266 ergreift. Durch eine entsprechende Dimensionierung der Transporthülse 280 ist so mit Sicherheit erreicht, daß sich die Reibflächen 224,226 außer Eingriff befinden, sobald der hydraulische Druck ausreicht, den Handbremskolben 228 in seine Ausgangslage zu drücken. Die hierbei auf den

9

Kolben 228 ausgeübte Kraft muß so groß sein, daß sie sowohl die auf den Kolben selbst, aber auch auf die Hülse 252 ausgeübten Reibkräfte überwindet.

Bei steigender Bremskraft und damit größer werdendem hydraulischen Druck wandert der Bremskolben immer weiter nach links, wobei die Nachstellmutter 220 den auf sie über die Nachstellspindel 214 ausgeübten axialen Kräften durch eine Drehbewegung ausweicht, so daß die sich drehende Nachstellmutter die Nachstellspindel 214 herausschraubt.

Nach dem Ende der Betätigung der Fußbremse wird durch die Entlastung des Bremsengehäuses bzw. des Bremssattels und der Bremsbeläge sowie der Wirkung der Roll-back-Dichtung 210 schließlich der Bremskolben 208 in der Zeichnung nach rechts gepreßt, wobei durch die auftretenden Kräfte die Nachstellmutter 220 in entgegengesetzter Richtung dreht. Durch diese Schraubbewegung der Mutter wird die Nachstellspindel 214 und damit der Bremskolben 208 nach rechts geholt. Voraussetzung für diese ordnungsgemäße Arbeitsweise der erfindungsgemäßen Nachstellvorrichtung ist, daß die Reibungskräfte, die die Hülse 252 und damit die Nachstellmutter 220 in axialer Richtung festhalten, größer sind als die axial wirkenden Reibungskräfte der sich auf der Nachstellspindel 214 drehenden Mutter 220.

Bei Beginn der Betätigung der Handbremse liegt der Handbremskolben 228 in seiner rechten Ausgangslage und zwischen den Reibflächen 224 und 226 herrscht das Spiel S. Durch die Drehung der Welle 238 wird der Handbremskolben 228 in der Zeichnung nach links bewegt und kommt in Krafteingriff mit der Nachstellmutter 220, die samt Nachstellspindel 214 und Bremskolben 208 ebenfalls nach links bewegt wird. Da wegen des Reibschlußes der Flächen 224,226 sowie der Drehsicherung des Handbremskolbens 228 die Nachstellmutter 220 nicht drehen kann, wird die von den Handbremskolben ausgehende Kraft über die Nachstellspindel 214 auf den Bremskolben übertragen.

Über die Nachstellmutter 220 und das Wälzlager 246 wird dabei auch die Hülse 252 unter der Klemmhülse 284 nach links verschoben. Die Transporthülse 280 übt dabei keine Kraft auf die Hülse 252 aus, da die Innenfläche der Transporthülse gegenüber der Mantelfläche des Flansches 266 ein Spiel besitzt.

Wird die Handbremse losgelassen, so wird, wie weiter oben schon beschrieben, eine in der Zeichnung nach rechts gerichtete Kraft auf den Kolben 208 ausgeübt, wobei die Reibflächen 224,226 noch im Eingriff sind und somit die Spindel der auf sie wirkenden Kraft nicht durch eine Drehbewegung ausweichen kann. Infolgedessen wird die Einheit aus Kolben 208, Nachstellvorrichtung 201 und Bremskolben 228 nur so weit nach rechts verschoben, wie die hierfür auf den Bremskolben 208 einwirkenden Kräfte ausreichen. Die Bremsscheibe kann sich aber gleichwohl zwischen den Bremsbelägen frei bewegen, da zum einen das Spiel des Wälzlagers 246 und zum anderen die durch den Schlag der Bremsscheibe ausgeübten Kräfte dafür ausreichen, die Bremsscheibe frei zwischen den Belägen drehen zu lassen. Da sowohl bei der Handbremsung als auch bei der Rückwärtsbewegung des Kolbens nach der Handbremsbetätigung dieselbe Flankenseite von Spindel und Nachstellmutter im Eingriff sind, vermag das Gewindespiel nichts zum Lösen der Bremse nach der Handbremsung beizutragen.

Andererseits ist aber die Hülse 252 mit den Wälzlager 246 nach Überwindung einer geeigneten Reibkraft in axialer Richtung verschiebbar, so daß der Bremskolben samt der Hülse 252 nach dem Lösen der Handbremse nach rechts verschoben-werden kann. Man wird also die die Hülse 252 haltende Reibkraft so groß halten, daß sie die Reibkraft der Nachstellmutter 220 auf der Spindel 214 überwindet, andererseits aber der Rückbewegung des Bremskolbens 208 keinen erheblichen Widerstand entgegensetzt.

Die Ausgangslage des Bremskolbens 228 wird, wie weiter oben schon beschrieben, dann erreicht, wenn durch eine neue Fußbremsung der dabei entstehende hydraulische Druck den Handbremskolben 228 und damit die Hülse 252 wieder nach rechts verschiebt.

Wird die Fußbremse bei betätigter Handbremse in fehlerhafter Weise bedient, so ist, trotz geschlossener Reibkupplung 224, 226, die Bewegung des Bremskolbens durch die Bewegungsmöglichkeit der Klemmhülse 284 nur unwesentlich eingeschränkt. Gegebenenfalls wird die Nachstellmutter 220 von der Reibkupplung der Flächen 224 und 226 befreit, sobald die auf den Bremskolben 208 wirkende Kraft groß genug ist, die Reibkraft zwischen der Hülse 252 und der Klemmhülse 224 zu überwinden und so das Lager samt der Nachstellmutter 220 von dem Handbremskolben 228 wegzuziehen, bis sich die Nachstellmutter 220 wieder drehen und damit der Kolben weitgehend kraftfrei ausgefahren werden kann.

Nach der Beendigung der fehlerhaften Bremsung treten die gleichen Voraussetzungen auf, wie auch oben im Zusammenhang mit der Handbremsung beschrieben, nur, daß jetzt zusätzlich noch das Spiel zwischen Nachstellmutter und Spindel zur Befreiung der Bremse zur Verfügung steht. Die Bremse kann natürlich nicht weiter nach rechts zurückgeschoben werden, als es der Bremskolben 228 mit dem auf ihn einwirkenden Stößel 239 zuläßt.

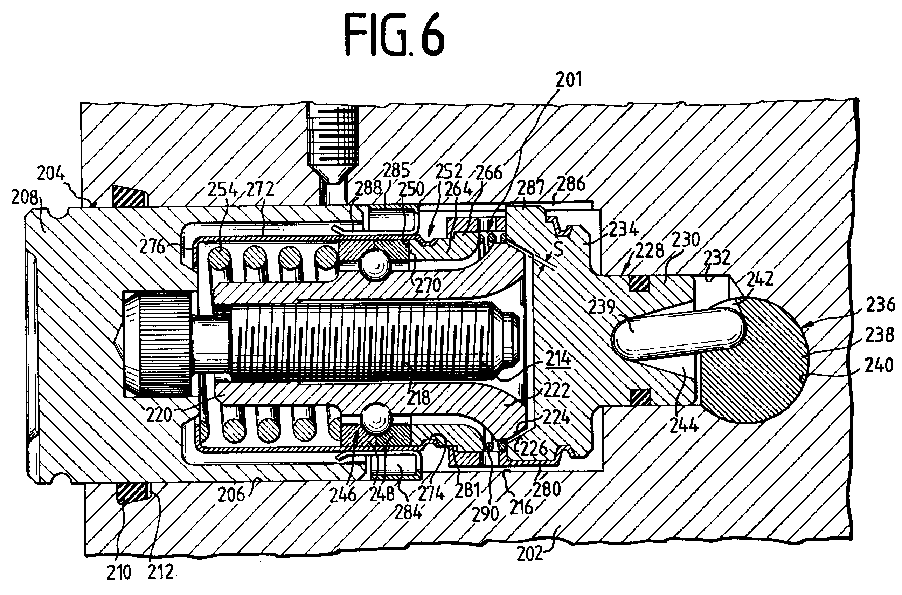

In Weiterbildung der Erfindung mag es gemäß Fig. 6 zweckmäßig sein, zwischen Bremskolben 228 und Hülse 252 eine geeignete Feder vorzusehen, welche diese beiden Bauteile versucht, voneinander in bestand zu halten. Dabei sollte die Federkraft so groß gewählt sein, daß sie die auf den Handbremskolben 228 in axialer Richtung ausgeübten Reibkräfte überwindet. In diesem Falle wird also der Reibschluß der Flächen 224,226 gelöst, sobald nach Beendigung des Bremsens der Handbremskolben 228 den Raum hat, nach rechts auszuweichen.

Allerdings darf die Kraft der Feder 290 in Fig. 6 nicht so groß gewählt sein, daß sie die Reibkraft der Lagerung der Hülse 252 überwindet, da andernfalls eine Handbremsung nicht mehr möglich wäre.

Die Wirkung der Ausgestaltung nach Fig. 6 entspricht der im Zusammenhang mit Fig. 5 beschriebenen.

**Patentansprüche**

1. Selbsttätige Nachstellvorrichtung für eine Scheibenbremse,
   – wobei die Scheibenbremse einen Bremskolben (8) aufweist, der zur Betätigung einer Bremsbacke in der Zylinderbohrung (4) eines Bremsgehäuses (2) verschiebbar angeordnet und der sowohl hydraulisch als auch über eine mechanische Betätigungseinrichtung (28,36,39) betätigbar ist;
   – mit einem zwischen dem Bremskolben (8) und der mechanischen Betätigungseinrichtung (28,36,39) angeordneten, zwei über ein selbsthemmungsfreies Gewinde (18) miteinander verbundene Nachstellelemente (14,20) aufweisenden, verlängerbaren Nachstellglied, wobei das eine der Nachstellelemente (20) über ein Lager (46) an einem gehäusefesten Anschlag (70) anliegt und das andere Nachstellelement gegenüber dem Bremskolben (8) drehsicher befestigt ist und bei der Bremsbewegung des Kolbens (8) die beiden Nachstellelemente (14,20) sich gegeneinander verdrehen, sowie
   – mit einer Reibkupplung (20 bis 35) zum Festhalten des einen Nachstellelementes bei mechanischer Betätigung,
   dadurch **gekennzeichnet**, daß das andere Nachstellelement (14) entgegen der Kraft einer Feder (82) in axialer Richtung außer Eingriff zu einem am Bremskolben (8) angeordneten Anschlag (85) bringbar ist, so daß der Bremskolben (8) bei geschlossener Reibkupplung (20 bis 35) in Bremsrichtung bewegbar bleibt und gleichzeitig eine unerwünschte Spielnachstellung vermieden wird.

2. Nachstellvorrichtung nach Anspruch 1, dadurch **gekennzeichnet,** daß das andere Nachstell element (14) durch einen parallel zur Bremskolbenlängsachse und exzentrisch zu dieser angeordneten, am Boden des Bremskolbens (8) verankerten Stift (84) drehsicher gelagert ist, der in eine entsprechende Haltebohrung (86) am kolbenseitigen Ende des anderen Nachstellelementes (14) eingreift.

3. Nachstellvorrichtung nach Anspruch 1 oder 2, dadurch **gekennzeichnet**, daß der Anschlag durch eine konische Fläche (85) am Kolbenboden gebildet ist, dem die Mantelfläche eines fest mit dem kolbenseitigen Ende des anderen Nachstellelementes (14) verbundenen Konus (88) zugeordnet ist.

4. Nachstellvorrichtung nach Anspruch 3, dadurch **gekennzeichnet**, daß der Konus (88) einstückig mit dem anderen Nachstellelement (14) verbunden ist.

5. Nachstellvorrichtung nach einem der Ansprüche 1 bis 4, dadurch **gekennzeichnet**, daß die Feder durch eine Tellerfeder (82) gebildet ist, die sich an ihrem äußeren Bereich an der Innenfläche des Bremskolbens (8) und mit ihrem inneren Bereich an dem anderen Nachstellelement (14) abstützt und dieses in Richtung Kolbenboden zu drücken versucht.

6. Nachstellvorrichtung nach einem der Ansprüche 1 bis 5, dadurch **gekennzeichnet**, daß die Feder (82) mittels eines ringförmigen Einsatzes (90), vorzugsweise eines Sicherungsringes oder Schraubringes, an der Kolbeninnenfläche gegenüber dieser abgestützt ist.

7. Nachstellvorrichtung nach einem der Ansprüche 1 bis 5, dadurch **gekennzeichnet**, daß das andere Nachstellelement (14) nur um einen vorgegebenen Betrag gegenüber dem Bremskolben (8) in axialer Richtung verschiebbar ist und danach ein mit dem Kolben (8) verbundener zweiter Anschlag (190) gegenüber dem anderen Nachstellelement (14) wirksam ist.

8. Nachstellvorrichtung nach einem der Ansprüche 1 bis 5, dadurch **gekennzeichnet**, daß die Federkonstante der Feder (82) derart bemessen ist, daß sie die in axialer Richtung gerichteten Reibungskräfte zwischen den Nachstellelementen (14,20) überwiegt und andererseits die Federkraft der Feder (82) unterhalb der Federkraft liegt, mit der eine weitere Feder (54) das eine Nachstellelement (20) gegen den gehäusefesten Anschlag (70) zu pressen sucht.

9. Selbsttätige Nachstellvorrichtung für eine Scheibenbremse,
   – wobei die Scheibenbremse einen Bremskolben (108) aufweist, der zur Betätigung einer Bremsbacke in der Zylinderbohrung (104) eines Bremsgehäuses (102) verschiebbar angeordnet und der sowohl hydraulisch als auch über eine mechanische Betätigungseinrichtung (128,136,139) betätigbar ist;
   – mit einem zwischen dem Bremskolben (108) und der mechanischen Betätigungseinrichtung (128,136,139) angeordneten, zwei über ein selbsthemmungsfreies Gewinde (118) miteinander verbundene Nachstellelemente (114,120) aufweisenden, verlängerbaren Nachstellglied, wobei das eine der Nachstellelemente (120) über ein Lager (146) an einem gehäusefesten Anschlag (170) anliegt und das andere Nachstellelement (114) gegenüber dem Bremskolben (108) drehsicher befestigt ist und bei der Bremsbewegung des Kolbens (8) die beiden Nachstellelemente (114,120) sich gegeneinander verdrehen, sowie
– mit einer Reibkupplung (120 bis 135) zum Festhalten des einen Nachstellelementes (120) bei mechanischer Betätigung,
dadurch **gekennzeichnet**, daß die Reibkupplung (120 bis 135) mit einem durch den hydraulischen Druck betätigbaren Stufenkolben (135) versehen ist, der bei Überschreiten eines vorgegebenen hydraulischen Druckes dem einen der Nachstellelemente (120) folgt und dieses durch Reibschluß in seiner Drehbewegung hindert.

10. Nachstellvorrichtung nach Ansrpuch 9, dadurch **gekennzeichnet**, daß der Stufenkolben (135) über einen durch die Handbremse in Bewegungsrichtung des Bremskolbens bewegbaren Handbremskolben (128) verschiebbar geführt ist und in seiner durch hydraulischen Druck oder Handbremsbetätigung bedingten Betätigungslage reibschlüssig an dem einen Nachstellelement (120) angreift.

11. Nachstellvorrichtung nach einem der Ansprüche 9 oder 10, dadurch **gekennzeichnet**, daß der Stufenkolben (135) in Ruhezustand durch eine Feder (137) außer Eingriff mit dem einen Nachstellelement (120) gehalten ist, wobei durch die Rückhaltekraft dieser Feder der Druck festgelegt ist, bei dem der Stufenkolben (135) in Eingriff mit dem einen Nachstellelement (120) gelangt.

12. Nachstellvorrichtung nach einem der Ansprüche 9 bis 10, dadurch **gekennzeichnet**, daß eine Ausgleichsbohrung (141) vorgesehen ist, durch welche atmosphärischer Druck zu einem von dem hydraulischen Bremsdruck nicht erreichbaren Teil der Oberfläche des Stufenkolbens (135) geleitet wird.

13. Nachstellvorrichtung nach einem der Ansprüche 9 bis 12, dadurch **gekennzeichnet**, daß bei ca. 10 bar überschreitenden Druck seine Betätigungslage erreicht ist.

14. Selbsttätige Nachstellvorrichtung für eine Scheibenbremse,
– wobei die Scheibenbremse einen Bremskolben (208) aufweist, der zur Betätigung einer Bremsbacke in der Zylinderbohrung (204) eines Bremsgehäuses (202) verschiebbar angeordnet und der sowohl hydraulisch als auch mittels einer mechanischen Betätigungseinrichtung betätigbar ist;
– mit einem zwischen dem Bremskolben (208) und der mechanischen Betätigungseinrichtung (228,236,239) angeordneten, zwei über ein selbsthemmungsfreies Gewinde (218) miteinander verbundene Nachstellelemente (214,220) aufweisenden, verlängerbaren Nachstellglied, wobei das eine der Nachstellelemente (220) über ein Lager (246) an einem gehäusefesten Anschlag (270) anliegt und das andere Nachstellelement (214) gegenüber dem Bremskolben (208) drehsicher befestigt ist und bei der Bremsbewegung des Kolbens (8) die beiden Nachstellelemente (14,20) sich gegeneinander verdrehen, sowie
– mit einer Reibkupplung (220 bis 235) zum Festhalten des einen Nachstellelementes (220) bei mechanischer Betätigung,
– dadurch **gekennzeichnet**, daß das gegenüber dem Bremskolben (208) drehbare eine Nachstellelement (220) sich in radialer Richtung an dem Bremsgehäuse (202) abstützt, wobei das Lager (246) des anderen Nachstellelementes in Längsrichtung des Bremszylinders verschiebbar ist und daß das Lager (246 bis 274) in Längsrichtung der Zylinderbohrung (204) des Bremsgehäuses (202) gegenüber diesen im Reibschluß (288) gehalten ist, so daß das unter Krafteinwirkung in Längsrichtung der Zylinderbohrung (204) verschobene Lager (246 bis 274) nach Ende der Krafteinwirkung an dem erreichten Ort verbleibt.

15. Nach der Vorrichtung nach Anspruch 14, dadurch **gekennzeichnet**, daß das Lager (246 bis 272) ein als Kugellager (246) ausgestaltetes Drehlager ist.

16. Nachstellvorrichtung nach Anspruch 14 oder 15, dadurch **gekennzeichnet**, daß die gegenüber dem Bremszylinder (204) nicht drehbare äußere Lagerseite (248 bis 272, 284,285) in Längsrichtung des Bremszylinders (204) in einer Längsnut (286) im Gehäuse (201) geführt ist, in die ein entsprechender Vorsprung (285) der äußeren Lagerseite (248 bis 272, 284,285) eingreift.

17. Nachstellvorrichtung nach einem der Ansprüche 14 bis 16, dadurch **gekennzeichnet**, daß die äußere Lagerseite (248 bis 272, 284,285) eine im wesentlichen ringförmige Lagerhülse (252) aufweist, in der das andere Nachstellelement (220) drehbar gelagert ist, wobei die Lagerhülse (252) in einem gegenüber dem Gehäuse (202) ortsfest gehaltenen Klemmring (284) unter Reibschluß in Bremszylinderlängsrichtung verschiebbar angeordnet ist.

18. Nachstellvorrichtung nach einem der Ansprüche 14 bis 17, dadurch **gekennzeichnet**, daß ein mit der mechanischen Betätigungseinrichtung (228 bis 234) fest verbundener Anschlag (281) vorgesehen ist, welchem ein entsprechender Vorsprung (266) am Lager zugeordnet ist, und daß bei Rückwärtsbewegung der als Betätigungskolben (228) ausgestalteten Betätigungseinrichtung das Lager (246 bis 274) über den am Vorsprung (266) angreifenden Anschlag (281) in Richtung Betätigungseinrichtung (228) rückholbar ist.

19. Nachstellvorrichtung nach einem der Ansprüche 14 bis 18, dadurch **gekennzeichnet**, daß eine Feder (290) vorgesehen ist, welche sich sowohl an der Hülse (252) als auch an dem Handbremskolben (228) abstützt und somit diese beiden Bauteile in bestand voneinander hält, sobald die auf den Handbremskolben (228) ausgeübte Kraft aufgehoben wird.

20. Nachstellvorrichtung nach einem der Ansprüche 14 bis 19, dadurch **gekennzeichnet** , daß die Betätigungseinrichtung (228) einen seitlichen Ansatz (287) besitzt, welcher in eine Längsnut (286) im Bremszylinder (204,216) eingreift und die in Zylinderlängsrichtung verschiebbare Betätigungseinrichtung (228) gegen Verdrehen sichert.


**Revendications**

1. Dispositif automatique de rattrapage de jeu, pour frein à disque,
   – le frein à disque comprenant un piston de frein (8) qui est agencé de façon à pouvoir se déplacer en translation dans l'alésage-cylindre (4) d'un boîtier de frein (2) en vue d'actionner une plaquette de frein et qui est agencé de façon à pouvoir être actionné aussi bien hydrauliquement que par l'intermédiaire d'un dispositif d'actionnement mécanique (28, 36, 39),
   – le dispositif de rattrapage de jeu comportant, d'une part, un organe de rattrapage de jeu disposé entre le piston de frein (8) et le dispositif d'actionnement mécanique (28, 36, 39) et comportant deux éléments de rattrapage de jeu (14, 20) réunis entre eux par l'intermédiaire d'un filetage (18) sans autoblocage, l'un (20) des éléments de rattrapage de jeu prenant appui par l'intermédiaire d'un palier (46) sur une butée (70) fixe par rapport au boîtier et l'autre élément de rattrapage de jeu étant fixé de façon à être immobilisé en rotation vis-à-vis du piston de frein (8), tandis que, lors du mouvement de freinage du piston (8), ces deux éléments de rattrapage de jeu (14, 20) tournent l'un par rapport à l'autre,
   – et comprenant, d'autre part, un accouplement à friction (20 à 35) permettant d'immobiliser le premier élément de rattrapage de jeu lors d'un actionnement mécanique,
   caractérisé en ce que l'autre élément de rattrapage de jeu (14) est agencé de façon à pouvoir être amené hors de prise avec une butée (85) disposée sur le piston de frein (8), et à l'encontre de la force d'un ressort (82) agissant dans la direction axiale, de telle façon que le piston de frein (8) reste mobile dans la direction de freinage lorsque l'accouplement à friction (20 à 35) est fermé et qu'en même temps, le rattrapage de jeu non souhaité est évité.

2. Dispositif de rattrapage de jeu suivant la revendication 1, caractérisé en ce que l'autre élément de rattrapage de jeu (14) est monté de façon à être immobilisé en rotation par une broche (44) qui est disposée parallèlement à l'axe longitudinal du piston de frein et d'une manière excentrique par rapport à celui-ci et est ancrée sur le fond du piston de frein (8) et qui s'engage dans un perçage correspondant de maintien (86) ménagé à l'extrémité de l'autre élément de rattrapage de jeu (14) qui est située du côté du piston.

3. Dispositif de rattrapage de jeu suivant la revendication 1 ou 2, caractérisé en ce que la butée est formée par une surface conique (85) qui est située sur le fond du piston et à laquelle est associée la surface d'enveloppe d'un cône (88) solidaire à demeure de l'extrémité de l'autre élément de rattrapage de jeu (14) qui est située du côté du piston.

4. Dispositif de rattrapage de jeu suivant la revendication 3, caractérisé en ce que le cône (88) est rendu solidaire de l'autre élément de rattrapage de jeu (14) de façon à former un seul bloc.

5. Dispositif de rattrapage de jeu suivant l'une des revendications 1 à 4, caractérisé en ce que le ressort est forme d'une rondelle Belleville (82) qui prend appui par sa partie extérieure sur la surface intérieure du piston de frein (8) et par sa partie intérieure sur l'autre élément de rattrapage de jeu (14) et qui a tendance à repousser ce dernier en direction du fond du piston.

6. Dispositif de rattrapage de jeu suivant l'une des revendications 1 à 5, caractérisé en ce que le ressort (82) prend appui sur la surface intérieure du piston au moyen d'une pièce annulaire rapportée (90), de préférence un circlip ou une bague filetée, disposée sur cette surface intérieure du piston.

7. Dispositif de rattrapage de jeu suivant l'une des revendications 1 à 5, caractérisé en ce que l'autre élément de rattrapage de jeu (14) est agencé de façon à ne pouvoir se déplacer que d'une valeur déterminée à l'avance en translation suivant la direction axiale vis-à-vis du piston de frein (8) et en ce qu'ensuite, c'est une seconde butée (190) solidaire du piston (8) qui est active vis-à-vis de cet autre élément de rattrapage de jeu (14).

8. Dispositif de rattrapage de jeu suivant l'une des revendications 1 à 5, caractérisé en ce que la constante élastique du ressort (82) est dimensionnée de façon qu'il puisse vaincre les forces de frottement, dirigées suivant la direction axiale, s'exerçant entre les éléments de rattrapage de jeu (14, 20) et en ce que, par ailleurs, la force élastique du ressot (82) est inférieure à la force élastique avec laquelle un autre ressort (54) a tendance à appliquer le premier élément de rattrapage de jeu (20) en appui sur la butée (70) montée de façon fixe sur le boîtier.

9. Dispositif automatique de rattrapage de jeu, pour frein à disque,

– le frein à disque comprenant un piston de frein (108) qui est agencé de façon à pouvoir se déplacer en translation dans l'alésage-cylindre (104) d'un boîtier de frein (102) en vue d'actionner une plaquette de frein et qui est agencé de façon à pouvoir être actionné aussi bien hydrauliquement que par l'intermédiaire d'un dispositif d'actionnement mécanique (128, 136, 139),

– le dispositif de rattrapage de jeu comportant, d'une part, un organe de rattrapage de jeu disposé entre le piston de frein (108) et le dispositif d'actionnement mécanique (128, 136, 139) et comportant deux éléments de rattrapage de jeu (114, 120) réunis entre eux par l'intermédiaire d'un filetage (118) sans autoblocage, l'un (120) des éléments de rattrapage de jeu prenant appui par l'intermédiaire d'un palier (146) sur une butée (170) fixe par rapport au boîtier et l'autre élément de rattrapage de jeu (114) étant fixé de façon à être immobilisé en rotation vis-à-vis du piston de frein (108), tandis que, lors du mouvement de freinage du piston (108), ces deux éléments de rattrapage de jeu (114, 120) tournent l'un par rapport à l'autre,

– et comprenant, d'autre part, un accouplement à friction (120 à 135) permettant d'immobiliser le premier élément de rattrapage de jeu (120) lors d'un actionnement mécanique,

caractérisé en ce que l'accouplement à friction 120 à 135) est pourvu d'un piston étagé (135) qui est agencé de façon à pouvoir être actionné par la pression hydraulique et qui, lorsqu'une pression hydraulique déterminée à l'avance est dépassée, suit le premier élément de rattrapage de jeu (120) et empêche de dernier de tourner par application d'un effort de friction.

10. Dispositif de rattrapage de jeu suivant la revendication 9, caractérisé en ce que le piston étagé (135) est guidé, de façon à pouvoir se déplacer en translation, par un piston de frein à main (128) agencé de façon à pouvoir être déplacé par le frein à main suivant la direction de déplacement du piston de frein et en ce que, dans sa position d'actionnement déterminée par la pression hydraulique ou par l'actionnement du frein à main, ce piston étagé (135) vient en prise sur le premier élément de rattrapage de jeu (120) suivant une coopération d'entraînement par friction.

11. Dispositif de rattrapage de jeu suivant l'une des revendications 9 et 10, caractérisé en ce qu'en position de repos, le piston étagé (135) est maintenu par un ressort (137) hors de prise avec le premier élément de rattrapage de jeu (120), de sorte que la force de rappel de ce ressort détermine la pression à laquelle ce piston étagé (135) vient en prise avec le premier élément de rattrapage de jeu (120).

12. Dispositif de rattrapage de jeu suivant l'une des revendications 9 à 10, caractérisé en ce qu'il est prévu un perçage de compensation (141) par lequel la pression atmosphérique est transmise à une partie de la surface du piston étage (135) qui ne peut pas être atteinte par la pression hydraulique de freinage.

13. Dispositif de rattrapage de jeu suivant l'une des revendications 9 à 12, caractérisé en ce que sa position d'actionnement est atteinte pour une pression présentant un excès de 10 bars environ.

14. Dispositif automatique de rattrapage de jeu, pour frein à disque,

– le frein à disque comprenant un piston de frein (208) qui est agencé de façon à pouvoir se déplacer en translation dans l'alésage-cylindre (204) d'un boîtier de frein (202) en vue d'actionner une plaquette de frein et qui est agencé de façon à pouvoir être actionné aussi bien hydrauliquement que au moyen d'un dispositif d'actionnement mécanique,

– le dispositif de rattrapage de jeu comportant, d'une part, un organe de rattrapage de jeu disposé entre le piston de frein (208) et le dispositif d'actionnement mécanique (228, 236, 239) et comportant deux éléments de rattrapage de jeu (214, 220) réunis entre eux par l'intermédiaire d'un filetage (218) sans autoblocage, l'un (220) des éléments de rattrapage de jeu prenant appui par l'intermédiaire d'un palier (246) sur une butée (270) fixe par rapport au boîtier et l'autre élément de rattrapage de jeu (214) étant fixé de façon à être immobilisé en rotation vis-à-vis du piston de frein (208), tandis que, lors du mouvement de freinage du piston (208), ces deux éléments de rattrapage de jeu (214, 220) tournent l'un par rapport à l'autre,

– et comprenant, d'autre part, un accouplement à friction (220 à 235) permettant d'immobiliser le premier élément de rattrapage de jeu (220) lors d'un actionnement mécanique,

caractérisé en ce que le premier élément de rattrapage (220), qui est agencé de façon à pouvoir tourner vis-à-vis du piston de frein (208), prend appui suivant la direction radiale sur le boîtier de frein (202), tandis que le palier (246) de l'autre élément de rattrapage de jeu est agencé de façon à pouvoir se déplacer en translation suivant la direction longitudinale du cylindre de frein, et en ce que, suivant la direction longitudinale de l'alésage-cylindre (204) du boîtier de frein (202), le palier (246 à 274) est maintenu vis-à-vis de ce dernier par application d'une force de frottement (288), de sorte que le palier (246 à 274) qui a été déplace sous l'application d'une force suivant la direction longitudinale de l'alésage-cylindre (204) reste à l'emplacement atteint lorsque la force cesse d'être appliquée

15. Dispositif de rattrapage de jeu suivant la revendication 14, caractérisé en ce que le palier (246 à 372)

EP 0 352 306 B1

est un palier de rotation réalisé sous la forme d'un roulement à billes (246).

16. Dispositif de rattrapage de jeu suivant la revendication 14 ou 15, caractérisé en ce que la partie extérieure (248 à 172, 284, 285) du palier qui n'est pas rotative vis-à-vis du cylindre de frein (204) est guidée suivant la direction longitudinale de ce cylindre de frein (204) dans une rainure longitudinale (286) qui est ménagée dans le boîtier (201) et dans laquelle s'engage une saillie correspondante (285) de la partie extérieure de palier (248 à 272, 284, 285).

17. Dispositif de rattrapage de jeu suivant l'une des revendications 14 à 16, caractérisé en ce que la partie extérieure de palier (248 à 272, 284, 285) comprend un fourreau de palier (252), de forme pratiquement annulaire, dans lequel l'autre élément de rattrapage de jeu (220) est monté de manière rotative, ce fourreau de palier (252) est monté de façon à pouvoir se déplacer en translation, dans la direction longitudinale du cylindre de frein et suivant une coopération d'entraînement par friction, dans une douille de serrage (284) maintenue fixe vis-à-vis du boîtier (202).

18. Dispositif de rattrapage de jeu suivant l'une des revendications 14 à 17, caractérisé en ce qu'il est prévu une butée (281) qui est solidaire à demeure du dispositif mécanique d'actionnement (228 à 234) et à laquelle est associée une saillie correspondante (266) prévue sur le palier et en ce que, lors d'un déplacement de recul du dispositif d'actionnement réalisé sous la forme d'un piston d'actionnement (228), le palier (246 à 274) peut reculer en direction de ce dispositif d'actionnement (228) au moyen d'une butée (281) agissant sur la saillie (266).

19. Dispositif de rattrapage de jeu suivant l'une des revendications 14 à 18, caractérisé en ce qu'il est prévu un ressort (290) qui prend appui aussi bien sur le fourreau (252) que sur le piston de frein à main (228) et qui maintient donc ces deux pièces espacées l'une de l'autre dès qu'est supprimée la force exercée sur le piston de frein à main (228).

20. Dispositif de rattrapage de jeu suivant l'une des revendications 14 à 19, caractérisé en ce que le dispositif d'actionnement (228) comporte une saillie latérale (287) qui s'engage dans une rainure longitudinale (286) ménagée dans le cylindre de frein (204, 216) et qui immobilise en rotation le dispositif d'actionnement (228) pouvant se déplacer en translation suivant la direction longitudinale du cylindre.

**Claims**

1. An automatic adjusting device for a disc brake,
– said disc brake being comprised of a brake piston (8) which is slidably arranged in the cylinder bore (4) of a brake housing (2) for actuation of a brake shoe and which is actuatable both hydraulically and by means of a mechanical actuating device (28, 36, 39);
– with an extendable adjusting member arranged between the brake piston (8) and the mechanical actuating device (28, 36, 39) and comprising two adjusting elements (14, 20) which are interconnected by means of an anti-self-locking thread (18), one of the said adjusting elements (20) being in abutment, through a bearing (46), with a stop (70) which is rigid with the housing, and the other one of the said adjusting elements being secured unrotatably with respect to the brake piston (8), and with the two adjusting elements (14, 20) twisting in relation to each other during the braking motion of the piston (8) and,
– with a friction coupling (20 to 35) serving to retain one said adjusting element in the event of mechanical actuation,
**characterised** in that the other adjusting element (14) is releasable out of engagement with a stop (85) arranged at the brake piston (8) in axial direction in opposition to the force of a spring (82) so that the brake piston (8) remains movable in the braking direction with the friction coupling (20 to 35) engaged, while simultaneously an undesirable clearance adjustment is avoided.

2. An adjusting device as claimed in claim 1,
**characterised** in that the other adjusting element (14) is mounted unrotatably by means of a pin (84) arranged parallel with the longitudinal axis of the brake piston and eccentrically to that axis and secured to the bottom of said brake piston (8), said pin (84) engaging a corresponding retaining bore (86) at the piston-side end of the other adjusting element (14).

3. An adjusting device as claimed in claim 1,
**characterised** in that the said stop is constituted by a conical surface (85) at the piston bottom to which the generated surface of a cone (88) is associated which is rigidly connected to the piston-side end of the other adjusting element (14).

4. An adjusting device as claimed in claim 3,
**characterised** in that the said cone (88) is connected to the other adjusting element (14) to form one piece with it.

15

5. An adjusting device as claimed in anyone of claims 1 to 4,
**characterised** in that the said spring is formed by a cup spring (82) which takes support at the inside surface of the said brake piston (8) with its outer range and at the said other adjusting element (14) with its inner range, tending to urge the other adjusting element (14) in the direction of the piston bottom.

6. An adjusting device as claimed in anyone of claims 1 to 5,
**characterised** in that the spring (82) is supported with respect to the inside surface of the piston by means of an annular projection (90), preferably a circlip or a screw ring disposed at the said inside surface of the brake piston.

7. An adjusting device as claimed in anyone of claims 1 to 5,
**characterised** in that the other adjusting element (14) is slidable in axial direction relative to the brake piston (8) only by a predetermined amount, and in that subsequently a second stop (190) connected to the said piston (8) takes effect relative to the other adjusting element (14).

8. An adjusting device as claimed in anyone of claims 1 to 5,
**characterised** in that the spring rate of the spring (82) is dimensioned such that it exceeds the axially directed frictional forces between the adjusting elements (14, 20), and in that, on the other hand, the force of the spring (82) ranges beneath the force with which another spring (54) tends to urge the one adjusting element (20) against the said stop (70) which is rigid with the housing.

9. An automatic adjusting device for a disc brake,
– said disc brake being comprised of a brake piston (108) which is slidably arranged in the cylinder bore (104) of a brake housing (102) for actuation of a brake shoe and which is actuatable both hydraulically and by means of a mechanical actuating device (128, 136, 139);
– with an extendable adjusting member arranged between the brake piston (108) and the mechanical actuating device (128, 136, 139) and comprising two adjusting elements (114, 120) which are interconnected by means of an anti-self-locking thread (118), one of the said adjusting elements (120) being in abutment, through a bearing (146), with a stop (170) which is rigid with the housing, and the other one adjusting element (114) being secured unrotatably with respect to the brake piston (108), and with the two adjusting elements (114, 120) twisting in relation to each other during the braking motion of the piston (8) and,
– with a friction coupling (120 to 135) serving to retain one said adjusting element (120) in the event of mechanical actuation,
**characterised** in that the friction coupling (120 to 135) is furnished with a stepped piston (135) being actuatable by the hydraulic pressure and which, in the event of a predetermined hydraulic pressure being exceeded, follows the one adjusting element (120) and hinders it in its turning movement by frictional locking.

10. An adjusting device as claimed in claim 9,
**characterised** in that the stepped piston (135) is guided slidably through a handbrake piston (128) being movable in the direction of movement of the brake piston by the handbrake, and in that, in its actuating position determined by hydraulic pressure or by operation of the handbrake, the stepped piston frictionally engages the one adjusting element (120).

11. An adjusting device as claimed in anyone of claims 9 or 10,
**characterised** in that the stepped piston (135) in its inactive condition is being maintained by a spring (137) out of engagement with the one adjusting element (110), the retaining force of the said spring determining the pressure at which the stepped piston (135) moves into engagement with the one adjusting element (120).

12. An adjusting device as claimed in anyone of claims 9 to 10,
**characterised** in that a compensating bore (141) is provided through which atmospheric pressure is conveyed to a portion of the surface of the stepped piston (135) which cannot be reached by the hydraulic brake pressure.

13. An adjusting device as claimed in anyone of claims 9 to 12,
**characterised** in that its actuating position is reached at a pressure exceeding 10 bar approximately.

14. An automatic adjusting device for a disc brake,
– said disc brake being comprised of a brake piston (208) which is slidably arranged in the cylinder bore (204) of a brake housing (202) for actuation of a brake shoe and which is actuatable both hydraulically and by means of a mechanical actuating device;
– with an extendable adjusting member arranged between the brake piston (208) and the mechanical actuating device (228, 236, 239) and comprising two adjusting elements (214, 220) which are interconnected by means of an anti-self-locking thread (218), one of the said adjusting elements (220) being in abutment, through a bearing (246), with a stop (270) which is rigid with the housing, and the other one adjusting element (114) being secured unrotatably with respect to the brake piston (208), and with the two adjusting elements (14, 20) twisting in relation to each other during the braking motion of the piston (8) and,
– with a friction coupling (220 to 235) serving to retain one adjusting element (220) in the event of mechanical actuation,

**characterised** in that the one adjusting element (220) being rotatable in relation to the brake piston (208) taking support on the brake housing (202) in radial direction, with the bearing (246) of the other adjusting element being slidable in longitudinal direction of the brake cylinder, and in that the bearing (246 to 274) in longitudinal direction of the cylinder bore (204) of the brake housing (202) is held in frictional engagement (288) with the latter so that the bearing (246 to 274) which is displaced in longitudinal direction of the cylinder bore (204) under force effect remains at the location it reached upon termination of the force effect.

15. An adjusting device as claimed in claim 14,

**characterised** in that the bearing (246 to 272) is a pivot bearing designed as a ball bearing (246).

16. An adjusting device as claimed in claim 14 or 15,

**characterised** in that the external bearing side (248 to 272, 284, 285) not being rotatable with respect to the brake cylinder (204) is guided in the longitudinal direction of the brake cylinder (204) in a longitudinal groove (286) in the housing (201) into which a corresponding projection (285) of the external bearing side (248 to 272, 284, 285) engages.

17. An adjusting device as claimed in anyone of claims 14 to 16,

**characterised** in that the external bearing side (248 to 272, 284, 285) is comprised of a substantially ring-shaped bearing bushing (252) in which the said other adjusting element (220) is rotatably pivoted, said bearing bushing (252) being arranged slidably in the longitudinal direction of the brake piston in a friction lock within a clamping ring (284) which is retained stationarily with respect to the housing (202).

18. An adjusting device as claimed in anyone of claims 14 to 17,

**characterised** in that a stop (281) rigidly connected to the mechanical actuating device (228 to 234) is provided which is associated with a corresponding projection (266) at the said bearing, and in that in the event of a backward movement of the said actuating device being designed as an actuating piston (228), the said bearing (246 to 274) is restorable in the direction of the actuating device (228) through the said stop (281) making catch at the projection (266).

19. An adjusting device as claimed in anyone of claims 14 to 18,

**characterised** in that a spring (290) is provided which takes support both at the bushing (252) and at the handbrake piston (228), so keeping these two components at a distance from each other as soon as the force enacted upon the handbrake piston (228) is cancelled.

20. An adjusting device as claimed in anyone of claims 14 to 19,

**characterised** in that the actuating device (228) is furnished with a lateral projection (287) which engages a longitudinal groove (286) in the brake cylinder (204, 216) securing the said actuating device (228) which is slidable in the longitudinal direction of the said cylinder against turning.

FIG.1

FIG.2

EP 0 352 306 B1

# FIG.3

EP 0 352 306 B1

EP 0 352 306 B1

# FIG.4

# FIG.5

EP 0 352 306 B1

# FIG.6

EP 0 352 306 B1